# EUROPEAN PATENT APPLICATION

(11) **EP 4 447 386 A1**
(43) Date of publication of application: **16.10.2024**
(21) Application number: 22914534.7
(22) Date of filing: 23.12.2022
(51) Int. Cl.: H04L 12/00

(54) **COMMUNICATION METHOD AND COMMUNICATION APPARATUS**

(30) Priority: 29.12.2021 CN 202111631966
(71) Applicant: Huawei Technologies Co., Ltd., Shenzhen, Guangdong 518129 (CN)
(72) Inventor: WANG, Chujie, Shenzhen, Guangdong 518129 (CN); LI, Xianming, Shenzhen, Guangdong 518129 (CN)
(74) Representative: Maiwald GmbH
(86) International application number: PCT/CN2022/141388
(87) International publication number: WO 2023/125280

(57) **Abstract**

Embodiments of this application provide a communication method and a communication apparatus. The communication method includes: A first network element sends at least one piece of check content to a second network element, where the check content indicates an abnormal event that causes a fault of a second network; and the first network element receives at least one check result from the second network element, where the check result indicates whether the abnormal event occurs in the second network. In this way, the first network element can obtain the check result detected by the second network element based on the check content, to determine a fault root cause. This implements cross-operator fault diagnosis, and improves a fault diagnosis capability and an intent achievement rate.

## Description

This application claims priority to Chinese Patent Application No. 202111631966.1, filed with the China National Intellectual Property Administration on December 29, 2021 and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

Currently, in a network sharing scenario, a first operator that establishes a 5G base station usually performs operation and maintenance management on a shared 5th generation (5th generation, 5G) network. Therefore, a second operator that uses the 5G base station sends an intent related to network performance maintenance to the first operator, and the first operator manages performance of the 5G network of the second operator.

In an actual fault detection process, causes of a network performance fault occurring in the second operator are complex. The first operator cannot perform effective fault diagnosis on the second operator, and cannot diagnose a root cause of each type of fault. Consequently, an intent achievement rate related to network performance maintenance is low.

In this case, how to improve a fault diagnosis capability becomes an urgent problem to be resolved in the industry.

### SUMMARY

Embodiments of this application provide a communication method and a communication apparatus, to improve a fault diagnosis capability.

According to a first aspect, a communication method is provided. The method is applied to a communication system including a first network element and a second network element. The first network element belongs to a first network of a first operator, the second network element belongs to a second network of a second operator, and the method may be performed by the first network element or a chip in the first network element. The method includes: The first network element sends at least one piece of (or one or more pieces of) check content to the second network element, where the check content indicates an abnormal event that causes a fault of the second network; and the first network element receives at least one check result (or one or more check results) from the second network element, where the check result indicates whether the abnormal event occurs in the second network.

Therefore, in this application, the first network element may obtain the check result obtained by the second network element through detection based on the check content, to determine whether an abnormal event occurs in the second network. This implements cross-operator fault diagnosis, and improves a fault diagnosis capability and an intent achievement rate.

With reference to the first aspect, in some implementations of the first aspect, the method further includes: The first network element determines a fault root cause based on the at least one check result, where the fault root cause indicates a cause of the abnormal event.

Therefore, in this application, the first network element may determine, based on the obtained check result, fault root causes of various faults that may occur in an NSA dual-anchor network sharing scenario.

With reference to the first aspect, in some implementations of the first aspect, the method further includes: The first network element sends a first request to the second network element, where the first request indicates to perform fault rectification based on the fault root cause.

Therefore, in this application, a cross-operator fault rectification process between the first network element and the second network element is added, so that the fault root cause can be resolved in time.

With reference to the first aspect, in some implementations of the first aspect, the method further includes: The first network element sends a data type to the second network element, where the data type indicates a type of data information corresponding to the check content.

It should be understood that the data type is a type of data information required for performing a current checking method.

Specifically, a value range of the data type may include "LTE", "LTE+NR", and "NR". "LTE" indicates that the current checking method requires 4G base station data, "LTE+NR" indicates that the current checking method requires a combination of 4G base station data and 5G base station data, and "NR" indicates that the current checking method requires 5G base station data.

Therefore, in this application, the second network element can determine, based on the data type, whether data of the second network element is allowed to be disclosed. This improves the fault diagnosis capability and the intent achievement rate while ensuring security of the data of the second network element.

With reference to the first aspect, in some implementations of the first aspect, the method further includes: The first network element sends a data type and fault information to the second network element, where the data type indicates a type of data information corresponding to the check content, and the fault information indicates a severity of the fault of the second network.

Therefore, in this application, the second network element can determine, based on the data type and the fault information, whether data of the second network element is allowed to be disclosed. This improves the fault diagnosis capability and the intent achievement rate while ensuring security of the data of the second network element.

With reference to the first aspect, in some implementations of the first aspect, the method further includes: The first network element receives first indication information from the second network element, where the first indication information indicates that the second network element does not allow disclosure of the data information, or the first indication information indicates that the second network element supports confirmation of the check result.

Therefore, in this application, after learning that the second network element does not allow disclosure of the data of the second network element, the first network element can request the second network element to obtain the check result obtained by the second network element by performing detection based on the check content, and perform fault detection while ensuring data security of the second network element. This improves the fault diagnosis capability and the intent achievement rate.

With reference to the first aspect, in some implementations of the first aspect, the method further includes: The first network element sends the data type to a third network element, where the data type indicates the type of the data information corresponding to the check content, and the third network element belongs to the first network.

Therefore, in this application, the third network element may determine, based on the obtained data type and the first indication information of the second network element, whether to disclose data information of the first network. This improves the fault diagnosis capability and the intent achievement rate while ensuring data security of the first network element.

With reference to the first aspect, in some implementations of the first aspect, the method further includes: The first network element receives third indication information from the third network element, where the third indication information indicates that data information of the first network is allowed to be disclosed, and the data information of the first network corresponds to the check content.

Therefore, in this application, after receiving the third indication information, the first network element can send data information of the first network element while requesting the second network element to obtain the check result. This improves the fault diagnosis capability and the intent achievement rate.

According to a second aspect, a communication method is provided. The method is applied to a communication system including a first network element and a second network element. The first network element belongs to a first network of a first operator, the second network element belongs to a second network of a second operator, and the method may be performed by the second network element or a chip in the second network element. The method includes: The second network element receives at least one piece of (or one or more pieces of) check content from the first network element, where the check content indicates an abnormal event that causes a fault of the second network; the second network element determines at least one check result (or one or more check results) based on the at least one piece of check content; and the second network element sends the at least one check result to the first network element, where the check result indicates whether the abnormal event occurs in the second network.

Therefore, in this application, the first network element may obtain the check result obtained by the second network element through detection based on the check content, to determine whether an abnormal event occurs in the second network. This implements cross-operator fault diagnosis, and improves a fault diagnosis capability and an intent achievement rate.

With reference to the second aspect, in some implementations of the second aspect, the method further includes: The second network element receives a first request from the first network element, where the first request indicates to perform fault rectification based on a fault root cause.

Therefore, in this application, a cross-operator fault rectification process between the first network element and the second network element is added, so that the fault root cause can be resolved in time.

With reference to the second aspect, in some implementations of the second aspect, the method further includes: The second network element receives a data type from the first network element, where the data type indicates a type of data information corresponding to the check content; and the second network element determines, based on the data type, that the data information is not allowed to be disclosed.

Therefore, in this application, the second network element can provide, to the first network element, a check result obtained by the second network element by performing detection based on the check content. This improves the fault diagnosis capability and the intent achievement rate while ensuring data security of the second network element.

With reference to the second aspect, in some implementations of the second aspect, the method further includes: The second network element receives a data type and fault information from the first network element, where the data type indicates a type of data information corresponding to the check content, and the fault information indicates a severity of a fault of the second network; and the second network element determines, based on the data type and the fault information, that the data information is not allowed to be disclosed.

Therefore, in this application, the second network element can provide, to the first network element, a check result obtained by the second network element by performing detection based on the check content. This improves the fault diagnosis capability and the intent achievement rate while ensuring data security of the second network element.

With reference to the second aspect, in some implementations of the second aspect, the method further includes: The second network element sends first indication information to the first network element, where the first indication information indicates that the second network element does not allow disclosure of the data information, or the first indication information indicates that the second network element supports confirmation of the check result.

Therefore, in this application, if the second network element does not allow disclosure of the data of the second network element, the second network element can receive a request of the first network element, send, to the first network element, the check result obtained by the second network element by performing detection based on the check content, and perform fault detection while ensuring data security of the second network element. This improves the fault diagnosis capability and the intent achievement rate.

With reference to the second aspect, in some implementations of the second aspect, the method further includes: The second network element sends first indication information to a third network element, where the third network element belongs to the first network.

Therefore, in this application, the third network element determines, based on the first indication information, whether to disclose data information of the first network. This improves the fault diagnosis capability and the intent achievement rate while ensuring data security of the first network element.

According to a third aspect, a communication method is provided. The method is applied to a communication system including a first network element and a second network element. The first network element belongs to a first network of a first operator, the second network element belongs to a second network of a second operator, and the method may be performed by the first network element or a chip in the first network element. The method includes: The first network element sends at least one piece of (or one or more pieces of) first information to the second network element, where the first information is used to request at least one piece of (or one or more pieces of) data information corresponding to check content, and the check content indicates an abnormal event that causes a fault of the second network; the first network element receives the at least one piece of data information from the second network element; and the first network element determines at least one check result (or one or more check results) based on the at least one piece of data information, where the check result indicates whether the abnormal event occurs in the second network.

Therefore, in this application, the first network element may obtain the data information of the second network element required by the check content, and the first network element performs detection based on the check content by using the data information of the second network element, to obtain the check result, so as to determine whether an abnormal event occurs in the second network. This implements cross-operator fault diagnosis, and improves a fault diagnosis capability and an intent achievement rate.

With reference to the third aspect, in some implementations of the third aspect, the method further includes: The first network element determines a fault root cause based on the at least one check result, where the fault root cause indicates a cause of the abnormal event.

Therefore, in this application, the first network element may determine, based on the obtained check result, fault root causes of various faults that may occur in an NSA dual-anchor network sharing scenario.

With reference to the third aspect, in some implementations of the third aspect, the method further includes: The first network element sends a first request to the second network element, where the first request indicates to perform fault rectification based on the fault root cause.

Therefore, in this application, a cross-operator fault rectification process between the first network element and the second network element is added, so that the fault root cause can be resolved in time.

With reference to the third aspect, in some implementations of the third aspect, the method further includes: The first network element sends a data type to the second network element, where the data type indicates a type of the data information corresponding to the check content.

Therefore, in this application, the second network element can determine, based on the data type, whether data of the second network element is allowed to be disclosed. This improves the fault diagnosis capability and the intent achievement rate while ensuring security of the data of the second network element.

With reference to the third aspect, in some implementations of the third aspect, the method further includes: The first network element sends a data type and fault information to the second network element, where the data type indicates a type of the data information corresponding to the check content, and the fault information indicates a severity of the fault of the second network.

Therefore, in this application, the second network element can determine, based on the data type and the fault information, whether data of the second network element is allowed to be disclosed. This improves the fault diagnosis capability and the intent achievement rate while ensuring security of the data of the second network element.

With reference to the third aspect, in some implementations of the third aspect, the method further includes: The first network element receives second indication information from the second network element, where the second indication information indicates that the second network element allows disclosure of the data information.

Therefore, in this application, the second network element can provide the first network element with the data information required by the check content, so that the first network element can perform check based on the data information of the second network element. This improves the fault diagnosis capability and the intent achievement rate.

According to a fourth aspect, a communication method is provided. The method is applied to a communication system including a first network element and a second network element. The first network element belongs to a first network of a first operator, the second network element belongs to a second network of a second operator, and the method may be performed by the second network element or a chip in the second network element. The method includes: The second network element receives at least one piece of (or one or more pieces of) first information from the first network element, where the first information is used to request at least one piece of (or one or more pieces of) data information corresponding to check content, and the check content indicates an abnormal event that causes a fault of the second network; and the second network element sends the at least one piece of data information to the first network element, where the data information is used to determine a check result, and the check result indicates whether the abnormal event occurs in the second network.

Therefore, in this application, the first network element may obtain the data information of the second network element required by the check content, and the first network element performs detection based on the check content by using the data information of the second network element, to obtain the check result, so as to determine whether an abnormal event occurs in the second network. This implements cross-operator fault diagnosis, and improves a fault diagnosis capability and an intent achievement rate.

With reference to the fourth aspect, in some implementations of the fourth aspect, the method further includes: The second network element receives a first request from the first network element, where the first request indicates to perform fault rectification based on a fault root cause.

Therefore, in this application, a cross-operator fault rectification process between the first network element and the second network element is added, so that the fault root cause can be resolved in time.

With reference to the fourth aspect, in some implementations of the fourth aspect, the method further includes: The second network element receives a data type from the first network element, where the data type indicates a type of data information corresponding to the check content; and the second network element determines, based on the data type, that the data information is allowed to be disclosed.

Therefore, in this application, the second network element can provide the first network element with the data information required by the check content. This improves the fault diagnosis capability and the intent achievement rate.

With reference to the fourth aspect, in some implementations of the fourth aspect, the method further includes: The second network element receives a data type and fault information from the first network element, where the data type indicates a type of data information corresponding to the check content, and the fault information indicates a severity of a fault of the second network; and the second network element determines, based on the data type and the fault information, that the data information is allowed to be disclosed.

Therefore, in this application, the second network element can provide the first network element with the data information required by the check content. This improves the fault diagnosis capability and the intent achievement rate.

With reference to the fourth aspect, in some implementations of the fourth aspect, the method further includes: The second network element sends second indication information to the first network element, where the second indication information indicates that the second network element allows disclosure of the data information.

Therefore, in this application, the second network element can provide the first network element with the data information required by the check content, so that the first network element can perform check based on the data information of the second network element. This improves the fault diagnosis capability and the intent achievement rate.

According to a fifth aspect, a communication method is provided. The method is applied to a communication system including a first network element, a second network element, and a third network element. The first network element and the third network element belong to a first network of a first operator, the second network element belongs to a second network of a second operator, and the method may be performed by the third network element or a chip in the third network element. The method includes: The third network element receives at least one piece of (or one or more pieces of) second information from the second network element, where the second information includes a check result or data information; and the third network element sends the at least one piece of second information to the first network element, where the check result indicates whether an abnormal event occurs in the second network, and the data information is used to determine the check result.

Therefore, in this application, the first network element may obtain data information of the second network element through forwarding by the third network element, determine the check result based on the data information, or obtain the check result obtained by the second network element through detection based on check content, and determine a fault root cause based on the check result, to determine whether an abnormal event occurs in the second network. This implements cross-operator fault diagnosis, and improves a fault diagnosis capability and an intent achievement rate.

With reference to the fifth aspect, in some implementations of the fifth aspect, the method further includes: The third network element receives a data type from the first network element; the third network element receives first indication information from the second network element; and the third network element determines, based on the data type and the first indication information, whether to disclose data information of the first network, where the data type indicates a type of data information corresponding to the check content, the check content indicates an abnormal event that causes a fault of the second network, the first indication information indicates that the second network element does not allow disclosure of the data information, and the data information of the first network corresponds to the check content.

Therefore, in this application, the third network element determines, based on the data type and the first indication information, whether to disclose the data information of the first network. This improves the fault diagnosis capability and the intent achievement rate while ensuring data security of the first network element.

With reference to the fifth aspect, in some implementations of the fifth aspect, the method further includes: The third network element sends third indication information to the first network element, where the third indication information indicates that data information of the first network is allowed to be disclosed.

Therefore, after receiving the third indication information, the first network element can send the data of the first network element while requesting the second network element to obtain the check result. This improves the fault diagnosis capability and the intent achievement rate while ensuring security of the data of the first network element.

With reference to the fifth aspect, in some implementations of the fifth aspect, the method further includes: The third network element receives a first request from the first network element, where the first request indicates to perform fault rectification based on a fault root cause, and the fault root cause indicates a reason why the abnormal event occurs; and the third network element sends the first request to the second network element.

Therefore, in this application, a cross-operator fault rectification process between the first network element and the second network element is added, so that the fault root cause can be resolved in time.

With reference to the fifth aspect, in some implementations of the fifth aspect, the method further includes: The third network element receives a data type and fault information from the first network element, where the fault information indicates a severity of a fault of the second network; and the third network element sends the data type and the fault information to the second network element.

Therefore, in this application, the third network element forwards, to the second network element, the data type and the fault information that are received from the first network element, so that the second network element can determine, based on the data type and the fault information, whether the data is allowed to be disclosed. This improves the fault diagnosis capability and the intent achievement rate while ensuring data security of the second network element.

With reference to the fifth aspect, in some implementations of the fifth aspect, the method further includes: The third network element receives third information from the second network element, where the third information includes first indication information or second indication information, and the second indication information indicates that the second network element allows disclosure of the data information; and the third network element sends the third information to the first network element.

Therefore, in this application, the third network element forwards, to the first network element, the third information received from the second network element, so that the first network element can determine, based on the third information, whether the second network element allows disclosure of the data. This ensures data security of the second network element.

With reference to the fifth aspect, in some implementations of the fifth aspect, the method further includes: The third network element receives at least one piece of fourth information from the first network element, where the fourth information includes the check content or the first information; and the third network element sends the at least one piece of fourth information to the second network element.

Therefore, in this application, the third network element forwards, to the second network element, the fourth information sent by the first network element, so that the second network element determines the second information based on the fourth information, and the first network element determines whether an abnormal event occurs in the second network. This implements cross-operator fault diagnosis, and improves the fault diagnosis capability and the intent achievement rate.

According to a sixth aspect, a communication method is provided. The method is applied to a communication system including a first network element, a second network element, and a third network element. The first network element and the third network element belong to a first network of a first operator, the second network element belongs to a second network of a second operator, and the method may be performed by the third network element or a chip in the third network element. The method includes: The third network element receives a data type from the first network element; the third network element receives first indication information from the second network element; and the third network element determines, based on the data type and the first indication information, whether to disclose data information of the first network, where the data type indicates a type of data information corresponding to check content, the check content indicates an abnormal event that causes a fault of the second network, the first indication information indicates that the second network element does not allow disclosure of the data information, and the data information of the first network corresponds to the check content.

Therefore, in this application, the third network element determines, based on the data type and the first indication information, whether to disclose data information of the first network. This improves a fault diagnosis capability and an intent achievement rate while ensuring data security of the first network element.

With reference to the sixth aspect, in some implementations of the sixth aspect, the method further includes: The third network element sends third indication information to the first network element, where the third indication information indicates that data information of the first network is allowed to be disclosed.

Therefore, after receiving the third indication infomation, the first network element can send the data of the first network element while requesting the second network element to obtain the check result. This improves the fault diagnosis capability and the intent achievement rate while ensuring security of the data of the first network element.

With reference to the sixth aspect, in some implementations of the sixth aspect, the method further includes: The third network element receives at least one piece of (or one or more pieces of) second information from the second network element, where the second information includes a check result or data information, the check result indicates whether the abnormal event occurs in the second network, and the data information is used to determine the check result; and the third network element sends the at least one piece of second information to the first network element.

Therefore, in this application, the first network element may obtain data information of the second network element through forwarding by the third network element, determine the check result based on the data information, or obtain the check result obtained by the second network element through detection based on check content, and determine a fault root cause based on the check result, to determine whether an abnormal event occurs in the second network. This implements cross-operator fault diagnosis, and improves the fault diagnosis capability and the intent achievement rate.

With reference to the sixth aspect, in some implementations of the sixth aspect, the method further includes: The third network element receives a first request from the first network element, where the first request indicates to perform fault rectification based on a fault root cause, and the fault root cause indicates a reason why the abnormal event occurs; and the third network element sends the first request to the second network element.

Therefore, in this application, a cross-operator fault rectification process between the first network element and the second network element is added, so that the fault root cause can be resolved in time.

With reference to the sixth aspect, in some implementations of the sixth aspect, the method further includes: The third network element receives a data type and fault information from the first network element, where the fault information indicates a severity of a fault of the second network; and the third network element sends the data type and the fault information to the second network element.

Therefore, in this application, the third network element forwards, to the second network element, the data type and the fault information that are received from the first network element, so that the second network element can determine, based on the data type and the fault information, whether the data is allowed to be disclosed. This improves the fault diagnosis capability and the intent achievement rate while ensuring data security of the second network element.

With reference to the sixth aspect, in some implementations of the sixth aspect, the method further includes: The third network element receives third information from the second network element, where the third information includes first indication information or second indication information, and the second indication information indicates that the second network element allows disclosure of the data information; and the third network element sends the third information to the first network element.

Therefore, in this application, the third network element forwards, to the first network element, the third information received from the second network element, so that the first network element can determine, based on the third information, whether the second network element allows disclosure of the data. This ensures data security of the second network element.

According to a seventh aspect, a communication apparatus is provided, including units configured to perform the method shown in the first aspect. The communication apparatus may be a first network element, or may be performed by a chip or a circuit disposed in a first network element. This is not limited in this application.

The communication apparatus includes:
a transceiver unit, configured to send at least one piece of (or one or more pieces of) check content to a second network element, where the check content indicates an abnormal event that causes a fault of a second network. The transceiver unit is further configured to receive at least one check result (or one or more check results) from the second network element, where the check result indicates whether the abnormal event occurs in the second network.

With reference to the seventh aspect, in some implementations of the seventh aspect, a processing unit is further configured to determine a fault root cause based on the at least one check result, where the fault root cause indicates a cause of the abnormal event.

With reference to the seventh aspect, in some implementations of the seventh aspect, the transceiver unit is further configured to send a first request to the second network element, where the first request indicates to perform fault rectification based on the fault root cause.

With reference to the seventh aspect, in some implementations of the seventh aspect, the transceiver unit is further configured to send a data type to the second network element, where the data type indicates a type of data information corresponding to the check content.

With reference to the seventh aspect, in some implementations of the seventh aspect, the transceiver unit is further configured to send a data type and fault information to the second network element, where the data type indicates a type of data information corresponding to the check content, and the fault information indicates a severity of the fault of the second network.

With reference to the seventh aspect, in some implementations of the seventh aspect, the transceiver unit is further configured to receive first indication information from the second network element, where the first indication information indicates that the second network element does not allow disclosure of the data information, or the first indication information indicates that the second network element supports confirmation of the check result.

With reference to the seventh aspect, in some implementations of the seventh aspect, the transceiver unit is further configured to send a data type to a third network element, where the data type indicates a type of data information corresponding to the check content, and the third network element belongs to a first network.

With reference to the seventh aspect, in some implementations of the seventh aspect, the transceiver unit is further configured to receive third indication information from the third network element, where the third indication information indicates that data information of the first network is allowed to be disclosed, and the data information of the first network corresponds to the check content. The processing unit is further configured to disclose the data information of the first network.

For explanations of related content and beneficial effect of the communication apparatus provided in the seventh aspect, refer to the method shown in the first aspect. Details are not described herein again.

According to an eighth aspect, a communication apparatus is provided, including units configured to perform the method shown in the second aspect. The communication apparatus may be a second network element, or may be performed by a chip or a circuit disposed in a second network element. This is not limited in this application.

The communication apparatus includes:
a transceiver unit, configured to receive at least one piece of (or one or more pieces of) check content from a first network element, where the check content indicates an abnormal event that causes a fault of a second network; and a processing unit, configured to determine at least one check result (or one or more check results) based on the at least one piece of check content. The transceiver unit is further configured to send the at least one check result to the first network element, where the check result indicates whether the abnormal event occurs in the second network.

With reference to the eighth aspect, in some implementations of the eighth aspect, the transceiver unit is further configured to receive a first request from the first network element, where the first request indicates to perform fault rectification based on a fault root cause. The processing unit is further configured to perform fault rectification based on the fault root cause.

With reference to the eighth aspect, in some implementations of the eighth aspect, the transceiver unit is further configured to receive a data type from the first network element, where the data type indicates a type of data information corresponding to the check content. The processing unit is further configured to determine, based on the data type, that the data information is not allowed to be disclosed.

With reference to the eighth aspect, in some implementations of the eighth aspect, the transceiver unit is further configured to receive a data type and fault information from the first network element, where the data type indicates a type of data information corresponding to the check content, and the fault information indicates a severity of a fault of the second network. The processing unit is further configured to determine, based on the data type and the fault information, that the data information is not allowed to be disclosed.

With reference to the eighth aspect, in some implementations of the eighth aspect, the transceiver unit is further configured to send first indication information to the first network element, where the first indication information indicates that the second network element does not allow disclosure of the data information, or the first indication information indicates that the second network element supports confirmation of the check result.

With reference to the eighth aspect, in some implementations of the eighth aspect, the transceiver unit is further configured to send first indication information to a third network element, where the third network element belongs to a first network.

For explanations of related content and beneficial effect of the communication apparatus provided in the eighth aspect, refer to the method shown in the second aspect. Details are not described herein again.

According to a ninth aspect, a communication apparatus is provided, including units configured to perform the method shown in the third aspect. The communication apparatus may be a first network element, or may be performed by a chip or a circuit disposed in a first network element. This is not limited in this application.

The communication apparatus includes:
a transceiver unit, configured to send at least one piece of (or one or more pieces of) first information to a second network element, where the first information is used to request at least one piece of (or one or more pieces of) data information corresponding to check content, the check content indicates an abnormal event that causes a fault of a second network, and the transceiver unit is further configured to receive the at least one piece of data information from a second network element; and a processing unit, configured to determine, based on the at least one piece of data information, whether the abnormal event occurs in the second network.

With reference to the ninth aspect, in some implementations of the ninth aspect, a processing unit is further configured to determine a fault root cause based on the at least one check result, where the fault root cause indicates a cause of the abnormal event.

With reference to the ninth aspect, in some implementations of the ninth aspect, the transceiver unit is further configured to send a first request to the second network element, where the first request indicates to perform fault rectification based on the fault root cause.

With reference to the ninth aspect, in some implementations of the ninth aspect, the transceiver unit is further configured to send a data type to the second network element, where the data type indicates a type of data information corresponding to the check content.

With reference to the ninth aspect, in some implementations of the ninth aspect, the transceiver unit is further configured to send a data type and fault information to the second network element, where the data type indicates a type of data information corresponding to the check content, and the fault information indicates a severity of the fault of the second network.

With reference to the ninth aspect, in some implementations of the ninth aspect, the transceiver unit is further configured to receive second indication information from the second network element, where the second indication information indicates that the second network element allows disclosure of the data information.

For explanations of related content and beneficial effect of the communication apparatus provided in the ninth aspect, refer to the method shown in the third aspect. Details are not described herein again.

According to a tenth aspect, a communication apparatus is provided, including units configured to perform the method shown in the fourth aspect. The communication apparatus may be a second network element, or may be performed by a chip or a circuit disposed in a second network element. This is not limited in this application.

The communication apparatus includes:
a transceiver unit, configured to receive at least one piece of (or one or more pieces of) first information from a first network element, where the first information is used to request at least one piece of (or one or more pieces of) data information corresponding to check content, and the check content indicates an abnormal event that causes a fault of a second network; and a processing unit, configured to determine data information based on the check content. The transceiver unit is further configured to send the at least one piece of data information to the first network element, where the data information is used to determine a check result, and the check result indicates whether the abnormal event occurs in the second network.

With reference to the tenth aspect, in some implementations of the tenth aspect, the transceiver unit is further configured to receive a first request from the first network element, where the first request indicates to perform fault rectification based on a fault root cause. The processing unit is further configured to perform fault rectification based on the fault root cause.

With reference to the tenth aspect, in some implementations of the tenth aspect, the transceiver unit is further configured to receive a data type from the first network element, where the data type indicates a type of data information corresponding to the check content. The processing unit is further configured to determine, based on the data type, that the data information is allowed to be disclosed.

With reference to the tenth aspect, in some implementations of the tenth aspect, the transceiver unit is further configured to receive a data type and fault information from the first network element, where the data type indicates a type of data information corresponding to the check content, and the fault information indicates a severity of a fault of the second network. The processing unit is further configured to determine, based on the data type and the fault information, that the data information is allowed to be disclosed.

With reference to the tenth aspect, in some implementations of the tenth aspect, the transceiver unit is further configured to send second indication information to the first network element, where the second indication information indicates that the second network element allows disclosure of the data information.

For explanations of related content and beneficial effect of the communication apparatus provided in the tenth aspect, refer to the method shown in the fourth aspect. Details are not described herein again.

According to an eleventh aspect, a communication apparatus is provided, including units configured to perform the method shown in the fifth aspect. The communication apparatus may be a third network element, or may be performed by a chip or a circuit disposed in a third network element. This is not limited in this application.

The communication apparatus includes:
a transceiver unit, configured to receive at least one piece of (or one or more pieces of) second information from a second network element, where the second information includes a check result or data information, the check result indicates whether the abnormal event occurs in a second network, and the data information is used to determine the check result. The transceiver unit is further configured to send the at least one piece of second information to the first network element.

With reference to the eleventh aspect, in some implementations of the eleventh aspect, the transceiver unit is further configured to receive a data type from the first network element. The transceiver unit is further configured to receive first indication information from the second network element. A processing unit is further configured to determine, based on the data type and the first indication information, whether to disclose data information of a first network, where the data type indicates a type of data information corresponding to the check content, the check content indicates an abnormal event that causes a fault of the second network, the first indication information indicates that the second network element does not allow disclosure of the data information, and the data information of the first network corresponds to the check content.

With reference to the eleventh aspect, in some implementations of the eleventh aspect, the transceiver unit is further configured to send third indication information to the first network element, where the third indication information indicates that the data information of the first network is allowed to be disclosed.

With reference to the eleventh aspect, in some implementations of the eleventh aspect, the transceiver unit is further configured to receive a first request from the first network element, where the first request indicates to perform fault rectification based on a fault root cause, and the fault root cause indicates a reason why the abnormal event occurs. The transceiver unit is further configured to send the first request to the second network element.

With reference to the eleventh aspect, in some implementations of the eleventh aspect, the transceiver unit is further configured to receive a data type and fault information from the first network element, where the fault information indicates a severity of a fault of the second network. The transceiver unit is further configured to send the data type and the fault information to the second network element.

With reference to the eleventh aspect, in some implementations of the eleventh aspect, the transceiver unit is further configured to receive third information from the second network element, where the third information includes first indication information or second indication information, and the second indication information indicates that the second network element allows disclosure of the data information. The transceiver unit is further configured to send the third information to the first network element.

With reference to the eleventh aspect, in some implementations of the eleventh aspect, the transceiver unit is further configured to receive at least one piece of fourth information from the first network element, where the fourth information includes the check content or the first information. The transceiver unit is further configured to send the at least one piece of fourth information to the second network element, where the first information is used to request the at least one piece of data information corresponding to the check content, and the check content indicates the abnormal event that causes the fault of the second network.

For explanations of related content and beneficial effect of the communication apparatus provided in the eleventh aspect, refer to the method shown in the fifth aspect. Details are not described herein again.

According to a twelfth aspect, a communication apparatus is provided, including units configured to perform the method shown in the sixth aspect. The communication apparatus may be a third network element, or may be performed by a chip or a circuit disposed in a third network element. This is not limited in this application.

The communication apparatus includes:
a transceiver unit, configured to receive a data type from a first network element, where the transceiver unit is further configured to receive first indication information from a second network element; and a processing unit, configured to determine, based on the data type and the first indication information, whether to disclose data information of the first network.

The data type indicates a type of data information corresponding to check content, the check content indicates an abnormal event that causes a fault of a second network, the first indication information indicates that the second network element does not allow disclosure of data information, and the data information of the first network corresponds to the check content.

With reference to the twelfth aspect, in some implementations of the twelfth aspect, the transceiver unit is further configured to send third indication information to the first network element, where the third indication information indicates that the data information of the first network is allowed to be disclosed.

With reference to the twelfth aspect, in some implementations of the twelfth aspect, the transceiver unit is further configured to receive at least one piece of (or one or more pieces of) second information from the second network element, where the second information includes a check result or data information, the check result indicates whether the abnormal event occurs in the second network, and the data information is used to determine the check result. The transceiver unit is further configured to send the at least one piece of second information to the first network element.

With reference to the twelfth aspect, in some implementations of the twelfth aspect, the transceiver unit is further configured to receive a first request from the first network element, where the first request indicates to perform fault rectification based on a fault root cause, and the fault root cause indicates a reason why the abnormal event occurs. The transceiver unit is further configured to send the first request to the second network element.

With reference to the twelfth aspect, in some implementations of the twelfth aspect, the transceiver unit is further configured to receive a data type and fault information from the first network element, where the fault information indicates a severity of a fault of the second network. The transceiver unit is further configured to send the data type and the fault information to the second network element.

With reference to the twelfth aspect, in some implementations of the twelfth aspect, the transceiver unit is further configured to receive third information from the second network element, where the third information includes first indication information or second indication information, and the second indication information indicates that the second network element allows disclosure of the data information. The transceiver unit is further configured to send the third information to the first network element.

According to a thirteenth aspect, a communication apparatus is provided, including a processor. The processor is coupled to a memory, and the memory is configured to store a program or an instruction. When the program or the instruction is executed by the processor, the communication apparatus is enabled to perform the method according to the first aspect to the sixth aspect and the possible implementations of the first aspect to the sixth aspect.

Optionally, there are one or more processors, and there are one or more memories.

Optionally, the memory may be integrated with the processor, or the memory may be disposed separately from the processor.

Optionally, the forwarding device further includes a transmitting machine (transmitter) and a receiving machine (receiver).

According to a fourteenth aspect, a communication system is provided. The system includes the apparatus according to any one of the first aspect to the sixth aspect.

According to a fifteenth aspect, a computer-readable medium is provided. The computer-readable medium stores a computer program (also referred to as code or an instruction). When the computer program is run, a computer is enabled to perform the method according to any one of the first aspect to the sixth aspect.

According to a sixteenth aspect, a chip system is provided, including a memory and a processor. The memory is configured to store a computer program, and the processor is configured to invoke the computer program from the memory and run the computer program, to enable a communication device on which the chip system is installed to perform the method according to any one of the first aspect to the sixth aspect and the possible implementations of the first aspect to the sixth aspect.

The chip system may include an input chip or interface configured to send information or data, and an output chip or interface configured to receive information or data.

### BRIEF DESCRIPTION OF DRAWINGS

FIG. 1 is a diagram of a scenario to which an embodiment of this application can be applied;
FIG. 2 is a diagram of an intent execution system according to an embodiment of this application;
FIG. 3 is a schematic flowchart of an example of a communication method according to this application;
FIG. 4 is a schematic flowchart of another example of a communication method according to this application;
FIG. 5 is a schematic flowchart of another example of a communication method according to this application;
FIG. 6A and FIG. 6B are a schematic flowchart of another example of a communication method according to this application;
FIG. 7 is a schematic flowchart of another example of a communication method according to this application;
FIG. 8 is a diagram of a communication apparatus 800 according to an embodiment of this application; and
FIG. 9 is a diagram of a communication apparatus 900 according to this application.

### DESCRIPTION OF EMBODIMENTS

The following describes technical solutions in embodiments of this application with reference to accompanying drawings.

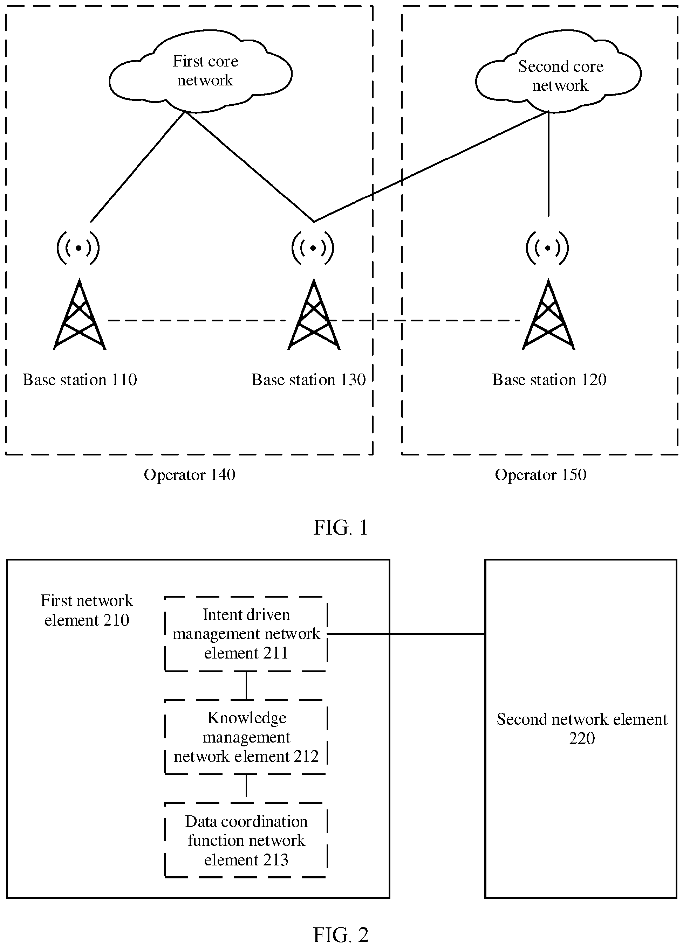

The technical solutions in embodiments of this application may be applied to various communication systems, for example, a non-standalone (Non-Standalone, NSA) dual-anchor communication system. In an NSA networking mode, a user terminal in a connected state can simultaneously use radio resources of at least two different base stations. A 4G base station serves as a primary station, is an anchor for the user terminal to access a network, provides a signaling control function for the user terminal to access the network, and can provide user plane data forwarding. A 5G base station serves as a secondary base station and provides an additional user-plane data forwarding resource for the user terminal. An NSA system includes two networks. A control plane of a first network is shared with a control plane of a second network, and a user plane of the first network is independent of a user plane of the second network. The first network may be a 4th generation (4th generation, 4G) mobile communication system, for example, a long term evolution (long term evolution, LTE) system or a worldwide interoperability for microwave access (worldwide interoperability for microwave access, WiMAX) communication system, or may be a 5th generation (5th generation, 5G) mobile communication system, for example, a new radio (new radio, NR) system, or may be a future communication system, for example, a 6th generation (6th generation, 6G) mobile communication system. This is not limited. The second network may be a 4G mobile communication system, for example, an LTE system or a WiMAX communication system, or may be a 5G mobile communication system, for example, an NR system, or may be a future communication system, for example, a 6G mobile communication system. This is not limited. FIG. 1 is a diagram of a scenario to which an embodiment of this application can be applied.

In FIG. 1, an NSA dual-anchor communication system 100 includes a base station 110, a base station 120, a base station 130, a first core network, a second core network, an operator 140, and an operator 150. The base station 110 and the base station 120 are 4G anchor base stations, the base station 120 is a 5G base station, the base station 110 and the base station 130 are base stations deployed by the operator 140, the first core network is a core network deployed by the operator 140, and the operator 140 may be referred to as a first operator. The base station 120 is a base station deployed by the operator 150, the second core network is a core network deployed by the operator 150, and the operator 150 may be referred to as a second operator. The base station 110 and the base station 120 are base stations in a first network, and the base station 130 is a base station in a second network.

An example in which the first network is a 4G network and the second network is a 5G network is used below for description. For example, the base station 110 and the base station 120 are 4G base stations, and the base station 120 is a 5G base station.

For example, in a network sharing scenario, an operator responsible for constructing a 5G network is referred to as a primary operator, namely, a first operator (for example, the operator 140 shown in FIG. 1), and an operator using the 5G network is referred to as a secondary operator, namely, a second operator (for example, the operator 150 shown in FIG. 1). In the network sharing scenario, statistics collection of network data (such as performance data and alarm data) can be performed for different operators, and a principle of "You build it, you run it" is followed, that is, the first operator is responsible for operation and maintenance management of the shared 5G network.

The operator 140 and the operator 150 each use respective independent 4G base stations as anchors, and jointly use the base station 120 as a 5G base station. The 4G base stations of the operator 140 and the operator 150 and the shared 5G base station are separately connected to respective core networks.

The operator 140 and the operator 150 each include a network management system (Network Management System, NMS) and an element management system (Element Management System, EMS).

Specifically, the NMS is a management system responsible for network operation and maintenance management. The NMS is generally built by a network operator and is used to interconnect with EMSs of different device vendors, to implement network management. The NMS may be a dedicated server, software, a virtual machine, or the like.

The EMS is a management system provided by a device vendor, and may manage one or more network elements (such as a base station) of the device vendor. The EMS may be a dedicated server, software, a virtual machine, or the like.

Generally, the NMS may be a network management system of an operator, and the EMS may be a network management system of a device vendor. For example, an NMS of a company A interconnects with an EMS of a company B, an EMS of a company C, and an EMS of a company D to monitor and manage a network status.

FIG. 1 shows only an example of a scenario to which the communication method provided in this application can be applied for ease of understanding of this application, and does not constitute any limitation on the protection scope of this application. The communication method provided in this application can be further applied to another scenario. Details are not described herein.

With development of the wireless field, for a fault that has occurred in a network, a fault root cause needs to be first found through fault diagnosis, and then a corresponding rectification solution is determined based on the fault root cause, and the fault is rectified by executing the rectification solution. To resolve the network fault, an intent-based fault rectification method is proposed.

The operator 150 needs to request the operator 140 to manage 5G performance (for example, a 5G handover success rate of the second operator) of the operator 150. To be specific, the EMS (referred to as a second network element below for ease of description) of the operator 150 sends an intent related to network performance maintenance to the NMS (referred to as a third network element below for ease of description) of the operator 140. After receiving the intent, the third network element transfers an intent expression to the EMS (referred to as a first network element below for ease of description) of the operator 150 through a communication interface (for example, a northbound interface). The first network element translates the intent expression into a specific requirement and operation, and executes the requirement and operation to achieve the intent.

For ease of understanding the technical solutions in embodiments of this application, some terms or concepts in embodiments of this application are first briefly described.

Intent: The intent indicates expectation on network performance. The intent may include one or more of the following: a requirement, an intent objective, and a constraint.

Intent expression: The intent expression is an expression used to carry an intent. The expression includes one or more of the following: an intent action name, an intent action attribute, an intent action object name, and an intent action object attribute. The intent expression has specific syntax and semantics.

Intent creation: Intent creation means creating an intent in an intent system.

Intent translation: Intent translation means translating an intent into an executable command, rule, or process.

The foregoing describes, with reference to FIG. 1, the scenario to which this application can be applied, and describes some concepts in this application. The following describes in detail the intent-based fault rectification method provided in this application with reference to the accompanying drawings.

It should be understood that a specific structure of an execution body of the method provided in embodiments of this application is not particularly limited in the following embodiments, provided that the execution body can run a program that records code of the method provided in embodiments of this application.

For ease of understanding of embodiments of this application, an intent processing system applicable to a method provided in embodiments of this application is first described in detail with reference to FIG. 2. FIG. 2 is a diagram of an intent execution system 200 applicable to an embodiment of this application. As shown in FIG. 2, the system 200 includes a first network element 210 and a second network element 220. The first network element 210 may include an intent driven management network element 211, a knowledge management network element 212, and a data coordination function network element 213. This is not limited.

For an intent driven management service (Intent Driven Management Service, IDMS) system, the first network element 210 may also be referred to as an intent service provider, and the second network element 220 may also be referred to as an intent consumer, and is an intent consumption subject. The first network element 210 may communicate with the second network element 220. For example, the second network element 220 may send a request message to the first network element 210, where the request message is used to request to create an intent or request to implement an intent.

The intent driven management network element 211 may receive request information from the intent consumption network element 110, and process the request information.

The knowledge management network element 212 may receive translation request information from the intent driven management network element 211, to implement an intent translation function.

The data coordination function network element 213 may implement data collection. Optionally, the data coordination function network element 213 receives a data query request from the intent driven management network element 211, and the data coordination function network element 213 may further report collected data to the intent driven management network element 211.

It should be noted that different intent processing systems may further include other network elements having corresponding functions.

In embodiments of this application, any network device in the first network element 210, the second network element 220, and the third network element may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), a satellite, an uncrewed aerial vehicle base station, an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, may be a gNB or a transmission point (TRP or TP) in a 5G system, for example, an NR system, or one antenna panel or one group of antenna panels (including a plurality of antenna panels) of a base station in a 5G system, or may be a network node that forms a gNB or a transmission point, for example, a baseband unit (BBU), a distributed unit (distributed unit, DU), or the like.

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of radio resource control (radio resource control, RRC) and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that a network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be noted that the solutions in this application may be applied to another system including a corresponding network element. This is not limited in this application.

In a non-standalone networking dual-anchor network sharing scenario, when performance of a 5G network of a second operator is faulty, if a fault occurs in a used 5G base station, fault detection and rectification may be performed by a first operator. If a fault occurs in a 4G anchor base station of a second operator, or a problem occurs in collaboration between a used 5G base station and a 4G anchor base station of a second operator, because a first operator cannot obtain related data (for example, 4G base station data) of the second operator, diagnosis and rectification of the related fault cannot be completed. Consequently, a fault diagnosis rate is low. Therefore, a communication method is urgently required to improve the fault diagnosis rate.

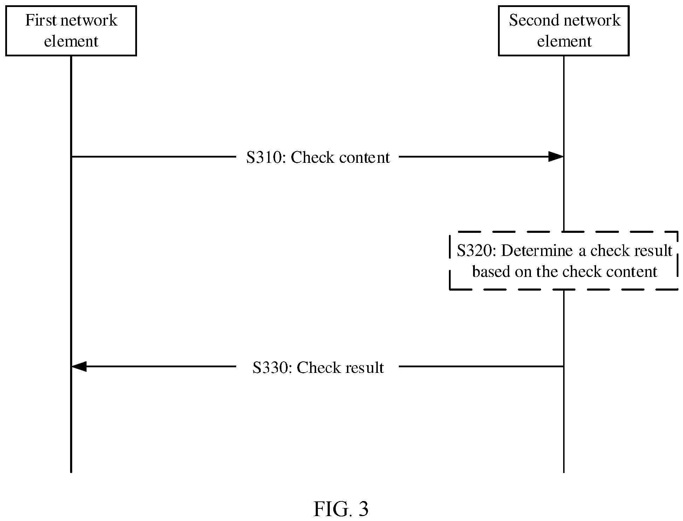

FIG. 3 is a schematic flowchart of an example of a communication method according to this application. The communication method is applied to a communication system including a first network element and a second network element. The first network element belongs to a first network of a first operator, and the second network element belongs to a second network of a second operator (for example, the communication system shown in FIG. 1).

The following describes the communication method in detail in combination with the steps. FIG. 3 includes the following step.

S310: The first network element sends check content to the second network element. In other words, the second network element receives the check content from the first network element. The check content indicates an abnormal event that causes a fault of the second network.

Optionally, the first network element sends one or more pieces of check content to the second network element.

Optionally, each piece of check content corresponds to a checking method. The checking method includes a method for detecting whether the abnormal event occurs.

It should be understood that the check content may correspond to one or more checking methods. When one piece of check content corresponds to a plurality of checking methods, the second network element may determine, through random selection, a checking method corresponding to the current check content. This is not limited. The checking method includes the method for detecting whether the abnormal event occurs. Optionally, the check content corresponds to a data type. The data type indicates a type of data information corresponding to the check content. The data information may be understood as network configuration data or network running status data, for example, alarm data, indicator measurement data, and a network running log. This is not limited. The data type is a type of data information required for performing the current checking method.

Specifically, a value range of the data type may include "LTE", "LTE+NR", and "NR". "LTE" indicates that the current checking method requires 4G base station data, "LTE+NR" indicates that the current checking method requires a combination of 4G base station data and 5G base station data, and "NR" indicates that the current checking method requires 5G base station data.

For example, the check content is that a handover measurement report is not reported. The checking method is checking whether the network measurement report sent to a 5G base station is included in a log data source of an interface for signaling or data transmission between a 4G base station and the 5G base station. A data type required for performing the checking method is a data type corresponding to the 4G base station data, for example, "LTE".

For another example, the check content is that an inter-base-station outgoing handover fails. The checking method is checking whether an execution success rate of an inter-base-station handover of a key performance indicator (Key Performance Indicator, KPI) of the 5G base station is lower than 99%. A data type required for performing the checking method is a data type corresponding to the 5G base station data, for example, "NR".

For another example, the check content is that a traffic reporting switch configuration of the 4G base station is inconsistent with that of the 5G base station. The checking method is checking whether a configuration parameter A of the 5G base station is the same as a configuration parameter B of the 4G base station. A data type required for performing the checking method is a data type corresponding to the 5G base station data and the 4G base station data, for example, "LTE+NR".

Further, the second network element performs detection based on the check content, to obtain a check result. The method procedure shown in FIG. 3 further includes the following step.

Optionally, after step S310, the method includes S320.

S320: The second network element determines the check result based on the check content.

The check result indicates whether the abnormal event occurs in the second network. For example, when the check content is that the handover measurement report is not reported, the check result obtained by the second network element by performing detection based on the check content may be that an event that the handover measurement report is not reported occurs, or the check result may be that an event that the handover measurement report is not reported does not occur.

For another example, when the check content is that an inter-base-station outgoing handover fails, the check result obtained by the second network element by performing detection based on the check content may be that an inter-base-station outgoing handover execution failure event occurs, or the check result may be that an inter-base-station outgoing handover execution failure event does not occur.

For another example, the check content is that a base station software version does not match, and the check result obtained by the second network element by performing detection based on the check content may be that the base station software version mismatch event occurs, or the check result may be that the base station software version mismatch event does not occur.

Further, the second network element may send the check result to the first network element. The method procedure shown in FIG. 3 further includes the following step.

S330: The second network element sends at least one check result to the first network element. In other words, the first network element receives the at least one check result from the second network element.

According to the foregoing method, the first network element may obtain the check result obtained by the second network element through detection based on the check content, to determine whether the abnormal event occurs in the second network. Further, compared with that a cross-operator fault needs to be diagnosed manually, the method provided in the foregoing embodiment can implement automatic cross-operator fault diagnosis. This improves a fault diagnosis capability and an intent achievement rate.

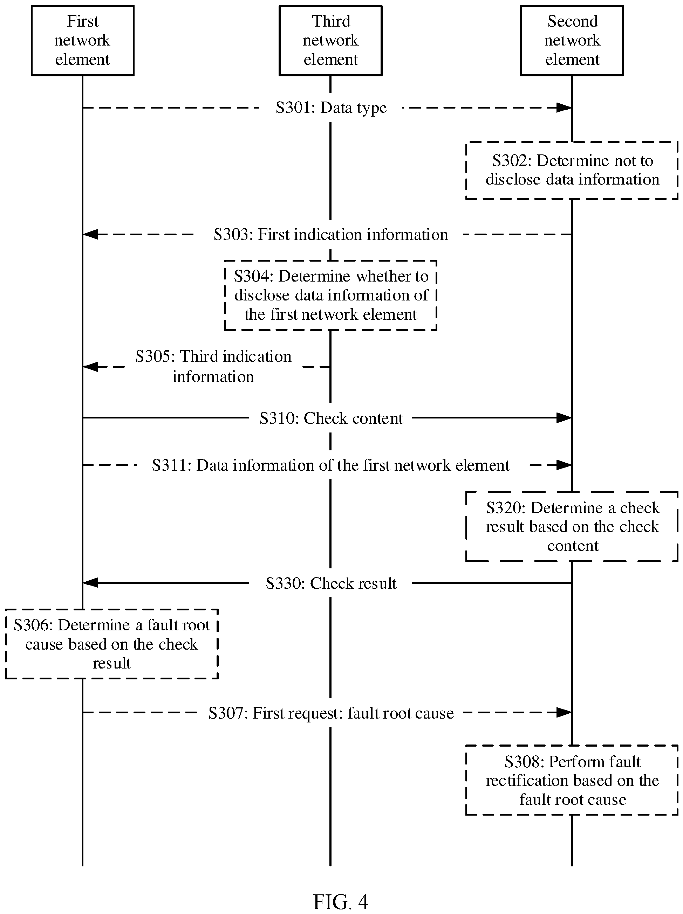

FIG. 4 is a schematic flowchart of an example of a communication method according to this application. The communication method is applied to a communication system (for example, the communication system shown in FIG. 1) including a first network element, a second network element, and a third network element. The first network element and the third network element belong to a first network of a first operator, and the second network element belongs to a second network of a second operator. For FIG. 4, refer to the descriptions of FIG. 3. Before step S310 in FIG. 3, optionally, any one or more of steps 301 to 305 are further included. Before step S320 in FIG. 3, optionally, step 311 is further included. After step S306 in FIG. 3, optionally, steps 307 and/or 308 are/is further included.

S301: The first network element sends a data type to the second network element. In other words, the second network element receives the data type from the first network element.

For descriptions of the data type, refer to the descriptions of step S310 in FIG. 3. Details are not described herein again.

It should be understood that sending the data type to the second network element to indicate a type of data information corresponding to check content is merely an example, and does not constitute any limitation on the protection scope of this application. The second network element may further determine the type of the data information corresponding to the check content in another manner. For example, a management network element notifies the type of the data information corresponding to the check content. For another example, the second network element locally stores a correspondence between the check content and the type of the data information corresponding to the check content.

S302: The second network element determines that data information is not allowed to be disclosed.

It should be understood that the data information is network configuration data or network running status data of the network to which the second network element belongs, for example, alarm data, indicator measurement data, or a network run log. This is not limited.

Optionally, the second network element determines, based on the data type, that data information of the second network element is not allowed to be disclosed.

It should be understood that the second network element determines, based on the data type required by the current check content, that the data information of the second network element is not allowed to be disclosed

For ease of understanding, how the second network element determines that the data information is not allowed to be disclosed is described with reference to a specific example.

When the data type is "LTE", if the second network element determines that the first network element can be supported in performing fault diagnosis by providing only a check result to the first network element, the second network element does not allow disclosure of the data information of the second network element, to ensure data security.

When the data type is "NR+LTE", if the second network element determines that a priority of completing fault rectification is higher than a priority of ensuring data security, the second network element discloses the data information of the second network element to the first network element; or if the second network element determines that a priority of ensuring data security is higher than a priority of completing fault rectification, the second network element does not disclose the data information of the second network element.

It should be understood that, that the second network element determines, based on the data type, that data information of the second network element is not allowed to be not disclosed is merely an example, and does not constitute any limitation on the protection scope of this application. The second network element may alternatively determine, in another manner, that the data information of the second network element is not allowed to be disclosed. For example, the second network element uses an intent creation request, sent to the first network element for fault diagnosis, to carry a first permission. The first permission indicates whether the second network element allows disclosure of data of the second network element, and the first permission includes allowing, by the second network element, disclosure of data to the first network element or not allowing, by the second network element, disclosure of the data to the first network element.

Further, the second network element sends, to the first network element, an indication indicating that the data information is not allowed to be disclosed. The method procedure shown in FIG. 4 may further include the following steps.

S303: The second network element sends first indication information to the first network element. In other words, the first network element receives the first indication information from the second network element.

For example, the second network element sends the first indication information to the third network element, and the third network element forwards the first indication information to the first network element.

The first indication information may indicate that the second network element does not allow disclosure of the data information, or the first indication information indicates that the second network element supports confirmation of the check result.

It should be understood that, when the second network element does not allow disclosure of the data information, the second network element can provide the first network element with only the check result obtained by the second network element by performing detection based on the check content.

According to the foregoing method, after learning that the second network element does not allow disclosure of the data of the second network element, the first network element can request the second network element to obtain the check result obtained by the second network element by performing detection based on the check content, and perform fault detection while ensuring data security of the second network element. This improves the fault diagnosis capability and the intent achievement rate.

Optionally, in S304, the third network element determines whether to disclose data information of the first network.

For example, the third network element determines that the data information of the first network is not allowed to be disclosed.

For example, when the data type is LTE+NR, if the third network element determines that the priority of completing fault rectification is higher than the priority of ensuring data security, the third network element allows disclosure of the data information of the first network to which the third network element belongs; or if the third network element determines that the priority of ensuring data security is higher than the priority of completing fault rectification, the third network element does not disclose the data information of the first network.

It should be understood that, that the third network element determines that the data information of the first network is not allowed to be disclosed is merely an example, and does not constitute any limitation on the protection scope of this application. The third network element may alternatively determine, in another manner, that the data information of the first network is not allowed to be disclosed. For example, the third network element determines, in a preset manner, specific data information of the first network that can be allowed to be disclosed.

Further, after the third network element determines to disclose the data information of the first network, the third network element sends third indication information to the first network element. The method procedure shown in FIG. 4 may further include the following step.

Optionally, in S305, the third network element sends the third indication information to the first network element.

The third indication information indicates that the data information of the first network is allowed to be disclosed, and the third indication information indicates that in S310, when the first network element sends the check content to the second network element, the data information of the first network may be allowed to be carried.

According to the foregoing method, after receiving the third indication information, the first network element can send data information of the first network element while requesting the second network element to obtain the check result. This improves the fault diagnosis capability and the intent achievement rate.

Further, the first network element determines, based on the first indication information and the third indication information, to send the check content to the second network element. The method procedure shown in FIG. 4 may further include the following steps.

S310: The first network element sends at least one piece of check content to the second network element. In other words, the second network element receives the at least one piece of check content from the first network element.

For example, the first network element sends at least one piece of check content to the third network element, and the third network element forwards the at least one piece of check content to the second network element.

It should be noted that the process of S310 is described in FIG. 3. To avoid repetition, detailed descriptions are omitted herein.

Optionally, in S311, when the first network element sends the at least one piece of check content to the second network element, the data information of the first network element may be further carried.

It should be understood that, after the first network element receives an indication from the third network element indicating that the data information of the first network is allowed to be disclosed, when sending the at least one piece of check content to the second network element, the first network element may further send the data information of the first network element. The data information of the first network element is data information of the first network element required for performing a current checking method.

Optionally, after step S310, the method includes S320.

S320: The second network element determines at least one check result based on the at least one piece of check content.

It should be noted that the process of S320 is described in FIG. 3. To avoid repetition, detailed descriptions are omitted herein.

S330: The second network element sends the at least one check result to the first network element. In other words, the first network element receives the at least one check result from the second network element.

For example, the second network element sends the at least one check result to the third network element, and the third network element forwards the at least one check result to the first network element.

It should be noted that the process of S330 is described in FIG. 3. To avoid repetition, detailed descriptions are omitted herein.

Further, after obtaining the at least one check result, the first network element may determine, based on the at least one check result, fault root causes of various faults that may occur in an NSA dual-anchor network sharing scenario. The method procedure shown in FIG. 4 may further include the following step.

S306: The first network element determines a fault root cause based on the at least one check result.

It should be understood that the first network element determines the fault root cause of a fault based on the at least one check result.

For example, the first network element determines, based on fault diagnosis knowledge to which a plurality of pieces of check content belong and a historical check result, whether there is checkable content. If there is checkable content, the first network element performs next-level check content querying. If there is no checkable content, the current check result is the fault root cause.

The fault root cause indicates a cause of the fault. For example, if the check result is that a configuration parameter "S 1 handover data forwarding switch" of a 4G base station is not set to "ON", a call drop easily occurs when a terminal device is handed over between 4G base stations. A root cause of a call drop fault (a current fault) is that the configuration parameter "S 1 handover data forwarding switch" of the 4G base station is not set to "ON".

Further, the first network element sends a first request to the second network element, so that the second network element performs fault rectification based on the first request. The method procedure shown in FIG. 4 may further include the following step.

S307: The first network element sends the first request to the second network element. In other words, the second network element receives the first request from the first network element.

For example, the first network element sends the first request to the third network element, and the third network element forwards the first request to the second network element.

The first request indicates to perform fault rectification based on the fault root cause. Optionally, the first request includes the fault root cause.

Optionally, the first request may further include a rectification suggestion, and the rectification suggestion may indicate a fault rectification method of the first network element. For example, for the example of the fault root cause in S306, the rectification suggestion may be that the configuration parameter "S 1 handover data forwarding switch" of the 4G base station is set to "ON". This is not limited.

Further, after receiving the first request, the second network element performs fault rectification based on the fault root cause. The method procedure shown in FIG. 4 may further include the following step.

S308: The second network element performs fault rectification based on the fault root cause.

It should be understood that corresponding manners of performing fault rectification based on different fault root causes are preset in the second network element. After receiving the first request, the second network element selects, based on the fault root cause carried in the first request, a fault rectification solution corresponding to the fault root cause, to perform fault rectification.

Optionally, the second network element may alternatively perform fault rectification based on the rectification suggestion carried in the first request.

It should be understood that, that the second network element may alternatively perform fault rectification based on the rectification suggestion carried in the first request is merely an example, and does not constitute any limitation on the protection scope of this application. The second network element may alternatively perform fault rectification in another manner. For example, the second network element performs fault rectification based on a preset default fault rectification solution. The default fault rectification solution may be cell reset, or the like. This is not limited.

Based on the foregoing solution, the first network element may obtain the check result detected by the second network element based on the check content, to determine whether the abnormal event occurs in the second network, so as to determine fault root causes of various faults that may occur in the NSA dual-anchor network sharing scenario. This implements cross-operator fault diagnosis, and improves the fault diagnosis capability and the intent achievement rate. In addition, cross-operator fault rectification between the first network element and the second network element is added, so that the fault root cause can be resolved in time.

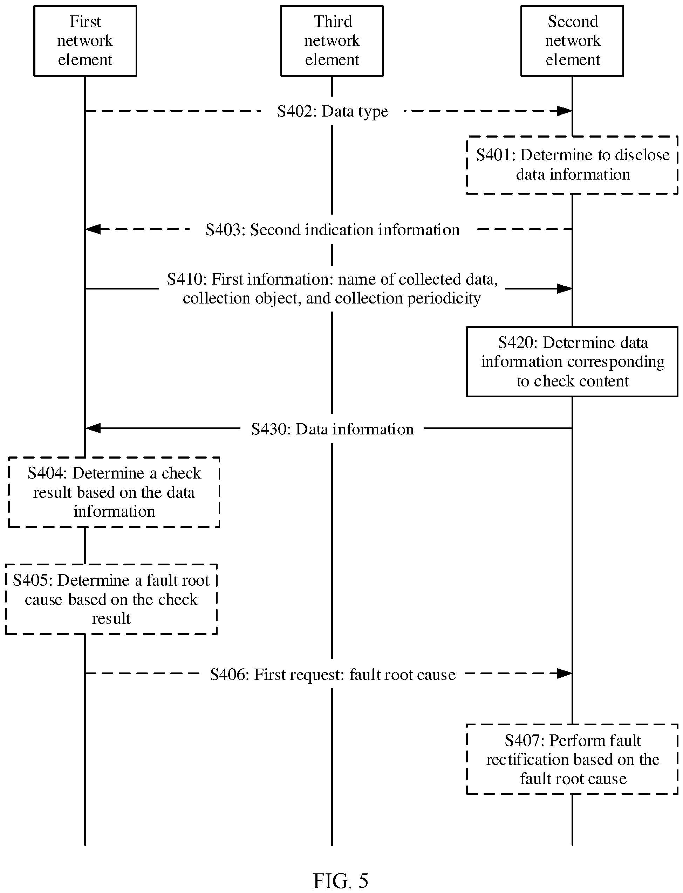

FIG. 5 is a schematic flowchart of an example of a communication method according to this application. The communication method is applied to a communication system (for example, the communication system shown in FIG. 1) including a first network element, a second network element, and a third network element. The first network element and the third network element belong to a first network of a first operator, and the second network element belongs to a second network of a second operator.

The following describes the communication method in detail in combination with the steps. FIG. 5 includes the following step.

S410: The first network element sends at least one piece of first information to the second network element. In other words, the second network element receives the at least one piece of first information from the first network element.

For example, the first network element sends the at least one piece of first information to the third network element, and the third network element forwards the at least one piece of first information to the second network element.

It should be understood that the first information includes any one or more of the following information: a name of collected data, a collection periodicity, and a collection object.

The name of the collected data indicates a name of a performance indicator of the second network element in current check content, for example, a 5G handover success rate. The collection periodicity indicates duration of data collection in the current check content, for example, 5 minutes. The collection object indicates a network element to which to-be-collected data belongs, for example, a gNB 1.

Further, after receiving the first information, the second network element determines data information based on the first information. The method procedure shown in FIG. 5 further includes the following step.

S420: The second network element determines the data information.

It should be understood that the second network element collects data of the second network element based on one or more of the name of the collected data, the collection periodicity, and the collection object, where the collected data is the data information.

Further, after determining the data information, the second network element sends the data information to the first network element. The method procedure shown in FIG. 5 further includes the following steps.

S430: The second network element sends at least one piece of data information to the first network element. In other words, the first network element receives the at least one piece of data information from the second network element. For example, the second network element sends the at least one piece of data information to the third network element, and the third network element forwards the at least one piece of data information to the first network element. S401: The second network element determines that data information of the second network element is allowed to be disclosed.

Optionally, in S402, the first network element sends a data type to the second network element, and the second network element determines, based on the data type, that the data information of the second network element is allowed to be disclosed.

It should be understood that a process in which the second network element receives the data type from the first network element is similar to S301. To avoid repetition, detailed descriptions are omitted herein.

Optionally, the second network element determines, based on the data type required by the current check content, that the data information of the second network element is allowed to be disclosed.

For ease of understanding, how the second network element determines that the data information of the second network element is allowed to be disclosed is described with reference to a specific example.

When the data type is "NR+LTE", if the second network element determines that a priority of completing fault rectification is higher than a priority of ensuring data security, the second network element discloses internal data information to the first network element.

It should be understood that, that the second network element determines, based on the data type, that data information of the second network element is allowed to be disclosed is merely an example, and does not constitute any limitation on the protection scope of this application. The second network element may alternatively determine, in another manner, that the data information of the second network element is disclosed. For example, the second network element uses an intent creation request, sent to the first network element for fault diagnosis, to carry a first permission. The first permission indicates whether the second network element allows disclosure of data of the second network element, and the first permission includes allowing, by the second network element, disclosure of data to the first network element or not allowing, by the second network element, disclosure of the data to the first network element.

Further, the second network element sends, to the first network element, an indication indicating that the data information is allowed to be disclosed. The method procedure shown in FIG. 5 may further include the following step.

S403: The second network element sends second indication information to the first network element. In other words, the first network element receives the second indication information from the second network element.

For example, the second network element sends the second indication information to the third network element, and the third network element forwards the second indication information to the first network element.

The second indication information may indicate that the second network element allows disclosure of the data information.

Further, after obtaining the data information, the first network element may determine, based on the data information, whether an abnormal event indicated by the current check content occurs. The method procedure shown in FIG. 5 may further include the following step.

S404: The first network element determines at least one check result based on the at least one piece of data information.

It should be understood that the first network element receives the at least one piece of data information from the second network element, performs abnormal event detection based on the current data information by using a checking method corresponding to the current check content, determines whether the abnormal event indicated by the current check content occurs, and obtains the check result corresponding to the current check content.

Further, after determining the current check result, the first network element may determine, based on the at least one check result, fault root causes of various faults that may occur in an NSA dual-anchor network sharing scenario. The method procedure shown in FIG. 5 may further include the following step.

S405: The first network element determines a fault root cause based on the at least one check result.

It should be understood that the first network element determines the fault root cause of a fault based on the at least one check result.

It should be noted that the process of S405 is similar to that of S306. To avoid repetition, detailed descriptions are omitted herein.

Further, the first network element sends a first request to the second network element, so that the second network element performs fault rectification based on the first request. The method procedure shown in FIG. 5 may further include the following step.

S406: The first network element sends the first request to the second network element. In other words, the second network element receives the first request from the first network element.

For example, the first network element sends the first request to the third network element, and the third network element forwards the first request to the second network element.

The first request indicates to perform fault rectification based on the fault root cause, and the first request includes the fault root cause.

Optionally, the first request may further include a rectification suggestion, and the rectification suggestion may indicate a fault rectification method of the first network element.

Further, after receiving the first request, the second network element performs fault rectification based on the fault root cause. The method procedure shown in FIG. 5 may further include the following step.

S407: The second network element performs fault rectification based on the fault root cause.

It should be noted that the process of S407 is similar to that of S308. To avoid repetition, detailed descriptions are omitted herein.

Based on the foregoing solution, the first network element may obtain the data information of the second network element required by the check content, and the first network element performs detection based on the check content by using the data information of the second network element, to obtain the check result, to determine whether the abnormal event occurs in the second network, so as to determine fault root causes of various faults that may occur in the NSA dual-anchor network sharing scenario. This implements cross-operator fault diagnosis, and improves a fault diagnosis capability and an intent achievement rate. In addition, cross-operator fault rectification between the first network element and the second network element is added, so that the fault root cause can be resolved in time.

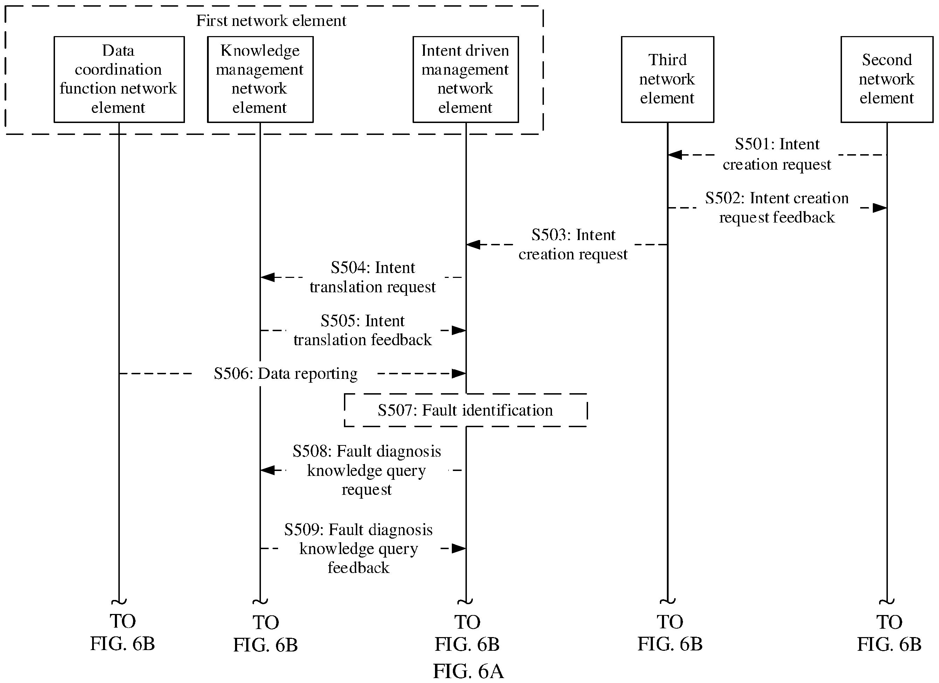

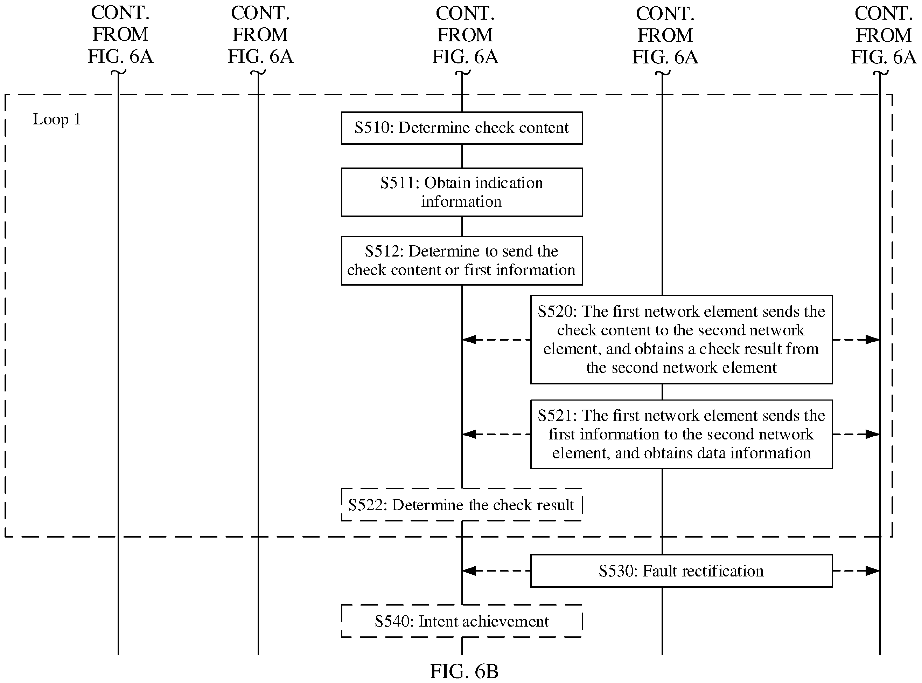

FIG. 6A and FIG. 6B are a schematic flowchart of an example of a communication method according to this application. The communication method is applied to a communication system (for example, the communication system shown in FIG. 1) including a first network element, a second network element, and a third network element. The first network element and the third network element belong to a first network of a first operator, and the second network element belongs to a second network of a second operator.

The following describes the communication method in detail in combination with the steps. FIG. 6A and FIG. 6B include the following step.

S501: The second network element sends an intent creation request to the third network element. In other words, the third network element receives an intent creation request from the first network element.

The intent creation request includes an intent expression, and the intent expression is used to express a specific requirement of an intent.

It should be understood that the specific requirement of the intent may be a requirement for one or more network performance indicators in an area. For example, an average network throughput rate in an area is not less than 100 Mbps; or an average network throughput rate in an area is not less than 100 Mbps, and average energy consumption is not greater than 50 kWh; or a 5G handover success rate is not less than 99%.

For example, after receiving the intent creation request, the third network element responds to the intent creation request. The method procedure shown in FIG. 6A and FIG. 6B may further include the following step.

S502: The third network element sends an intent creation request feedback to the second network element. In other words, the second network element receives an intent creation request feedback from the third network element.

After receiving the intent creation request, the third network element creates the intent based on the intent expression, and sends, to the second network element, the intent creation request feedback used to respond to the intent creation request.

Further, after responding to the intent creation request of the second network element, the third network element sends an intent creation request to an intent driven management network element. The method procedure shown in FIG. 6A and FIG. 6B may further include the following step.

S503: The third network element sends the intent creation request to the intent driven management network element. In other words, the intent driven management network element receives the intent creation request from the third network element.

The intent creation request includes an intent expression and a network identifier ID of an operator of the second network element, and the intent expression is the intent expression in S501.

Further, the intent driven management network element requests a knowledge management network element to translate the intent expression. The method procedure shown in FIG. 6A and FIG. 6B may further include the following step.

S504: The intent driven management network element sends the intent translation request to the knowledge management network element. In other words, the knowledge management network element receives the intent translation request from the intent driven management network element.

It should be understood that, after receiving the intent creation request, the intent driven management network element allocates an ID to the intent, and sends the intent translation request to the knowledge management network element. The intent translation request is used to request the knowledge management network element to translate the intent, and the intent translation request includes the ID of the intent and the intent expression.

Further, after completing translation, the knowledge management network element feeds back a translation result to the intent driven management network element. The method procedure shown in FIG. 6A and FIG. 6B may further include the following step.

S505: The knowledge management network element sends an intent translation feedback to the intent driven management network element. In other words, the intent driven management network element receives an intent translation feedback from the knowledge management network element.

The knowledge management network element performs intent translation based on the intent expression carried in the intent translation request, to obtain intent translation knowledge, uses the intent translation feedback to carry the intent translation knowledge and the ID of the intent, and sends the intent translation feedback to the intent driven management network element.

The intent translation knowledge includes a network monitoring rule, an intent strategy, and an intent achievement evaluation criterion.

It should be understood that the network monitoring rule indicates a rule for monitoring network data in an intent execution process, and the network monitoring rule may include a monitored object, a name of a monitoring indicator, and a data collection periodicity.

It should be understood that the intent strategy indicates strategy information required for intent execution, the intent strategy includes a fault identification strategy, and the intent strategy may further include a performance deterioration prediction strategy and a solution decision strategy.

It should be understood that the intent achievement evaluation criterion indicates evaluation of an intent achievement method, and the intent achievement evaluation criterion may include an intent target calculation formula, an evaluation periodicity, and a satisfaction range. For example, if a result obtained through calculation by using an intent target calculation formula is within the satisfaction range, it indicates that the intent is achieved.

Further, a data coordination function network element may periodically report data to the intent driven management network element, so that the intent driven management network element performs network performance maintenance. The method procedure shown in FIG. 6A and FIG. 6B may further include the following step.

S506: The data coordination function network element sends data reporting information to the intent driven management network element. In other words, the intent driven management network element receives data reporting information from the data coordination function network element.

The data coordination function network element periodically queries data, and sends the data reporting information to the intent driven management network element, where the data reporting information includes a name of collected data and a collection object. It should be understood that the name of the collected data and the collection object respectively correspond to the name of the monitoring indicator and the monitoring object in the network monitoring rule.

Further, the intent driven management network element performs network performance maintenance and fault detection based on reported data. The method procedure shown in FIG. 6A and FIG. 6B may further include the following step.

S507: The intent driven management network element performs fault identification.

The intent driven management network element performs fault identification based on the data reporting information and the fault identification strategy. It should be understood that the fault identification strategy is a fault identification strategy in the intent translation feedback sent by the knowledge management network element to the intent driven management network element in S505.

The fault identification strategy is a method for identifying or determining a network fault. For example, if an average handover success rate is lower than 90%, the fault identification strategy determines that an occurred fault is a handover fault. For another example, if an average call drop rate is higher than 40%, the fault identification strategy determines that an occurred fault is a call drop fault. For another example, if a handover success rate decreases by more than 20%, the fault identification strategy determines that an occurred fault is a handover fault. This is not limited.

Further, after detecting the fault, the intent driven management network element requests the knowledge management network element to determine fault diagnosis knowledge based on a fault name. The method procedure shown in FIG. 6A and FIG. 6B may further include the following step.

S508: The intent driven management network element sends a fault diagnosis knowledge query request to the knowledge management network element. In other words, the knowledge management network element receives a fault diagnosis knowledge query request from the intent driven management network element.

It should be understood that, after identifying the fault, the intent driven management network element determines the fault name based on the fault identification strategy. The fault name may be a handover fault, a call drop fault, or the like. This is not limited. The intent driven management network element uses the fault diagnosis knowledge query request to carry the fault name, and sends the fault diagnosis knowledge query request to the knowledge management network element. The fault diagnosis knowledge query request is used to request the knowledge management network element to perform querying based on the fault name, to determine the fault diagnosis knowledge, and the fault diagnosis knowledge is used to determine a fault detection method.

Further, the knowledge management network element feeds back the determined fault diagnosis knowledge to the intent driven management network element. The method procedure shown in FIG. 5 may further include the following step.

S509: The knowledge management network element sends a fault diagnosis knowledge query feedback to the intent driven management network element. In other words, the intent driven management network element receives a fault diagnosis knowledge query feedback from the knowledge management network element.

The knowledge management network element performs querying based on the fault name, determines the fault diagnosis knowledge, uses the fault diagnosis knowledge query feedback to carry the fault diagnosis knowledge, and sends the fault diagnosis knowledge query feedback to the intent driven management network element.

It should be understood that the fault diagnosis knowledge may be in a form of a fault tree, and includes the check content and a branch relationship between a checking method and check content. For example, a same-level branch of a checking method A is a checking method B, and a next-level branch of the checking method A is a checking method C and a checking method D.

It should be understood that one piece of check content corresponds to one checking method, and a type of data information required for performing the check checking may include three value ranges: "LTE", "LTE+NR", and "NR"."LTE" indicates that the current checking method requires 4G base station data, "LTE+NR" indicates that the current checking method requires a combination of 4G base station data and 5G base station data, and "NR" indicates that the current checking method requires 5G base station data.

Further, after obtaining the fault diagnosis knowledge, the intent driven management network element determines check content of current detection. The method procedure shown in FIG. 6A and FIG. 6B may further include the following step.

S510: The intent driven management network element determines the current check content.

The intent driven management network element determines the check content based on the fault diagnosis knowledge. Optionally, the intent driven management network element determines a priority of the check content based on the fault diagnosis knowledge.

For ease of understanding, how the intent driven management network element determines the check content based on the fault diagnosis knowledge is described with reference to a specific example.

It is assumed that the current check content is A. If a check result obtained by using a checking method A' is "Yes", checking is performed on a next-level branch, namely, check content C. If a check result obtained by using a checking method A' is "No", checking is performed on another same-level branch, namely, check content B. If a check result obtained by using a checking method A' is "Failed", checking is performed on another same-level branch, namely, check content B.

It should be understood that, when no check content exists, fault diagnosis ends.

It should be understood that the intent driven management network element may further determine, based on the check content, occurrence time of the fault, space information, and the like, the data type required by the current check content, and specific information such as the data name, the collection object, and a collection time period. This is not limited.

Further, after determining the current check content, the intent driven management network element determines, based on a first indication, to obtain the data information of the second network element or the check result determined by the second network element based on the current check content. The method procedure shown in FIG. 6A and FIG. 6B may further include the following step.

S511: The intent driven management network element obtains indication information.

The indication information indicates whether the first network element can request, during fault checking, the second network element for a permission for obtaining the data information, and the indication information includes any one of first indication information, second indication information, or third indication information.

The first indication information indicates that the second network element does not allow the first network element to request to disclose the data information of the second network element. In other words, the second network element does not disclose the data information, but the second network element allows the first network element to request the second network element for performing detection based on the current check content and obtain the check result.

The second indication information indicates that the second network element allows the first network element to request to disclose the data information of the second network element. In other words, the second network element discloses the data information.

The third indication information indicates that data information of the first network is allowed to be disclosed, and the third indication information indicates that in S310, when the first network element sends the check content to the second network element, the data information of the first network may be allowed to be carried.

S512: The first network element determines, based on the indication information, to send the check content or first information to the second network element.

It should be understood that, when the data type is "LTE" and the obtained indication information is the first indication information or the third indication information, S520 is performed. When the data type is "LTE+NR" and the obtained indication information is the third indication information, S520 and S311 are performed. In S311, the first network element sends data information of the first network element to the second network element. When the data type is "LTE" or "LTE+NR" and the obtained indication information is the second indication information, S521 and S522 are performed.

S520: The first network element sends the check content to the second network element, and obtains the check result from the second network element.

It should be noted that the process of S520 is similar to that of S310 to S330. To avoid repetition, detailed descriptions are omitted herein.

S521: The first network element sends the first information to the second network element, and obtains the data information.

It should be noted that the process of S521 is similar to that of S410 to S430. To avoid repetition, detailed descriptions are omitted herein.

S522: The first network element obtains the check result based on the data information.

It should be understood that the first network element receives the data information from the second network element, performs abnormal event detection based on the current data information by using a checking method corresponding to the current check content, determines whether the abnormal event indicated by the current check content occurs, and obtains the check result corresponding to the current check content.

Further, after determining the check result corresponding to the current check content, the first network element determines, based on the fault diagnosis knowledge and a historical check result, whether there is checkable content. If there is checkable content, the first network element performs next-level check content querying, that is, executes a loop Loop 1, and a specific process is S510 to S522. If there is no checkable content, the current check result is the fault root cause.

S530: After determining the fault root cause, the second network element performs fault rectification.

It should be noted that the process of S530 is similar to that of S305 and S306. To avoid repetition, detailed descriptions are omitted herein.

Further, after the second network element completes fault rectification, the intent driven management network element determines whether the current intent is achieved. The method procedure shown in FIG. 6A and FIG. 6B may further include the following step.

S540: The intent driven management network element determines, based on an intent achievement evaluation periodicity, whether the intent is achieved.

The intent driven management network element performs intent achievement evaluation within the intent achievement evaluation periodicity, and sends an intent achievement status notification to the third network element. The third network element sends an intent achievement feedback message to the second network element.

The intent achievement evaluation periodicity may be a predefined periodicity, for example, one hour or one day. This is not limited.

Based on the foregoing solution, the first network element may determine fault root causes of various faults that may occur in an NSA dual-anchor network sharing scenario. This implements cross-operator fault diagnosis, and improves a fault diagnosis capability and an intent achievement rate. In addition, cross-operator fault rectification between the first network element and the second network element is added, so that the fault root cause can be resolved in time.

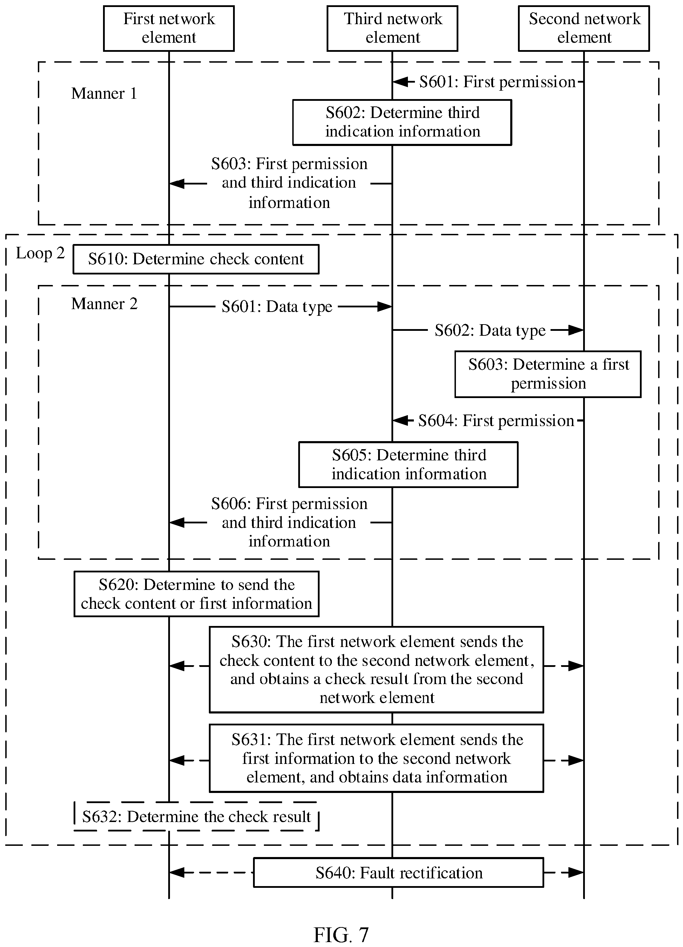

FIG. 7 is a schematic flowchart of an example of a communication method according to this application. The communication method is applied to a communication system (for example, the communication system shown in FIG. 1) including a first network element, a second network element, and a third network element. The first network element and the third network element belong to a first network of a first operator, and the second network element belongs to a second network of a second operator.

The following describes the communication method in detail in combination with the steps. FIG. 7 includes the following step.

S610: The first network element determines check content.

It should be noted that, the process of S610 is similar to that of S510. That the first network element determines check content may be understood as that an intent driven management network element in the first network element determines the check content based on fault diagnosis knowledge. To avoid repetition, detailed descriptions are omitted herein.

Further, the first network element obtains indication information, where the indication information indicates whether the first network element can request, during fault checking, the second network element for a permission for obtaining data information. The first network element may obtain the indication information in Manner 1 or Manner 2. Specifically, Manner 1 is as follows.

Before the first network element determines the current check content, the first network element has received the indication information, and the first network element receives the indication information in the following manner.

S601: The second network element sends a first permission to the third network element. In other words, the third network element receives a first permission from the second network element.

It should be understood that in S501, an intent creation request sent by the second network element to the third network element carries the first permission.

The first permission indicates a permission of the second network element for whether data is disclosed to the first network element, and the first permission includes first indication information or second indication information.

It should be understood that the second network element does not allow disclosure of the data to the first network element. In other words, the second network element does not allow the first network element to request to obtain data information of the second network element, but the second network element allows the first network element to request the second network element for a check result obtained by performing detection based on the current check content. In this case, the first permission is the first indication information.

It should be understood that the second network element allows disclosure of the data to the first network element. In other words, the second network element allows the first network element to request to obtain data information of the second network element. In this case, the first permission is the second indication information.

Further, after obtaining the first permission, the third network element determines whether to allow disclosure of data information of the first network element. The method procedure shown in FIG. 7 further includes the following step.

S602: The third network element determines third indication information based on the first permission.

The third indication information indicates that the second network element does not allow disclosure of the data, and the first network element allows carrying of the data information of the first network element, or that the second network element does not disclose the data information, but the second network element allows the first network element to request the second network element for the check result obtained by performing detection based on the current check content, and the first network element allows carrying of the data information of the first network element.

It should be understood that a form in which the third network element determines the third indication information based on the first permission is not limited in this application. For ease of understanding, how to determine a first indication is described with reference to a specific example.

For example, when the first permission is that the second network element does not allow disclosure of the data to the first network element, the third network element determines the third indication information.

Further, the third network element may send the third indication information to the first network element. The method procedure shown in FIG. 7 further includes the following step.

S603: The third network element sends the first permission and the third indication information to the first network element. In other words, the first network element receives the first permission and the third indication information from the third network element.

### Manner 2:

After the first network element determines the current check content, the first network element receives the indication information. The first network element receives the indication information in the following manner.

S601: The first network element sends a data type to the third network element. In other words, the third network element receives a data type from the first network element.

Optionally, the first network element uses first query information to carry the data type, and sends the first query information to the second network element.

For example, the first query information may further include an identity ID, and the ID indicates an ID corresponding to a currently diagnosed fault. It should be understood that the ID may be an ID of an intent corresponding to the currently diagnosed fault, or may be an ID of an operator corresponding to the intent. This is not limited.

It should be noted that the process of S601 is similar to that of S301. To avoid repetition, detailed descriptions are omitted herein.

Further, the third network element may send the data type to the second network element. The method procedure shown in FIG. 7 further includes the following step.

S602: The third network element sends the data type to the second network element. In other words, the second network element receives the data type from the third network element.

The third network element determines, based on the ID carried in the first query information, a network identifier ID of the operator corresponding to the intent, and sends second query information to the second network element corresponding to the operator, where the second query information includes the data type.

For example, the second query information may further include fault information.

It should be understood that the fault information indicates a severity of a fault of the second network, and the fault information may be the current check content, or may be content on which checking is completed, or may be a name of collected data required by the check content. This is not limited.

Further, the second network element may determine, based on the received data type, whether to disclose data to the first network element. The method procedure shown in FIG. 7 further includes the following step.

S603: The second network element determines a first permission based on the data type.

The first permission indicates a permission of the second network element for whether data is disclosed to the first network element, and the first permission includes first indication information or second indication information.

It should be understood that when the first permission determined by the second network element based on the data type is the first indication information, the process of S603 is similar to that of S302. To avoid repetition, detailed descriptions are omitted herein.

It should be understood that, when the first permission determined by the second network element based on the data type is the second indication information, the process of S603 is similar to that of S401. To avoid repetition, detailed descriptions are omitted herein.

Optionally, the second network element may further determine the first permission based on the data type and the fault information.

It should be understood that the first permission may alternatively be a default permission preset by the second network element.

Further, the second network element may send the first permission to the third network element. The method procedure shown in FIG. 7 further includes the following step.

S604: The second network element sends the first permission to the third network element. In other words, the third network element receives the first permission from the second network element.

Further, the third network element may determine, based on the first permission and the data type, whether the third network element can request the second network element for a permission for obtaining the data information. The method procedure shown in FIG. 7 further includes the following step.

S605: The third network element determines third indication information based on the first permission.

The third indication information indicates that the second network element does not allow disclosure of the data, and the first network element allows carrying of the data information of the first network element, or that the second network element does not disclose the data information, but the second network element allows the first network element to request the second network element for the check result obtained by performing detection based on the current check content, and the first network element allows carrying of the data information of the first network element.

It should be noted that the process of S605 is similar to that of S304 in Manner 1. To avoid repetition, detailed descriptions are omitted herein.

Further, the third network element may send the third indication information to the first network element. The method procedure shown in FIG. 7 further includes the following step.

S606: The third network element sends the first permission and the third indication information to the first network element. In other words, the first network element receives the first permission and the third indication information from the third network element.

Further, the first network element determines, based on a first indication, to obtain the data information of the second network element or the check result determined by the second network element based on the current check content. The method procedure shown in FIG. 7 may further include the following step.

S620: The first network element determines, based on the first permission and the third indication information, to send the check content or the first information to the second network element.

It should be understood that the first permission includes the first indication information or the second indication information. In other words, S610 may be understood as that the first network element determines, based on the indication information, to send the check content or the first information to the second network element.

It should be noted that the process of S620 is similar to that of S512 in Manner 1. To avoid repetition, detailed descriptions are omitted herein.

S630: The first network element sends the check content to the second network element, and obtains the check result from the second network element.

It should be noted that the process of S630 is similar to that of S310-S330. To avoid repetition, detailed descriptions are omitted herein.

S631: The first network element sends the first information to the second network element, and obtains the data information.

It should be noted that the process of S631 is similar to that of S410-S430. To avoid repetition, detailed descriptions are omitted herein.

S632: The first network element obtains the check result based on the data information.

It should be noted that the process of S632 is similar to that of S522. To avoid repetition, detailed descriptions are omitted herein.

Further, after determining the check result corresponding to the current check content, the first network element determines, based on the fault diagnosis knowledge and a historical check result, whether there is checkable content. If there is checkable content, the first network element performs next-level check content querying, that is, performs S601 to S632. If there is no checkable content, the current check result is a fault root cause.

It should be noted that S601 to S632 may be performed in the following several possible manners.

In a first possible manner, S601 to S603 in Manner 1 and S610 to S632 are performed. If next-level check content querying is performed, a Loop 2 is executed, that is, S610 to S632 are performed.

In a second possible manner, S610, S601 to S606 in Manner 2, and S620 to S632 are performed. If next-level check content querying is performed, a Loop 2 is executed, that is, S610, S601 to S06 in Manner 2, and S620 to S632 are cyclically performed.

S640: After determining the fault root cause, the second network element performs fault rectification.

It should be noted that the process of S640 is similar to that of S306-S308. To avoid repetition, detailed descriptions are omitted herein.

Based on the foregoing solution, the first network element may determine fault root causes of various faults that may occur in an NSA dual-anchor network sharing scenario. This implements cross-operator fault diagnosis, and improves a fault diagnosis capability and an intent achievement rate. In addition, cross-operator fault rectification between the first network element and the second network element is added, so that the fault root cause can be resolved in time.

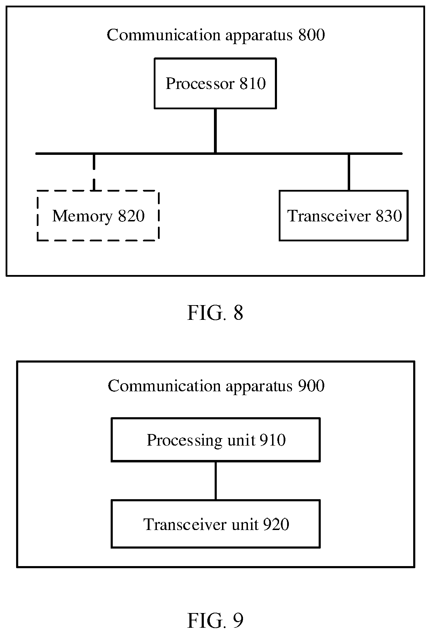

The foregoing describes in detail the communication methods provided in embodiments of this application with reference to FIG. 3 to FIG. 7. The following describes in detail communication apparatuses provided in embodiments of this application with reference to FIG. 8 and FIG. 9.

The following describes in detail communication apparatuses provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit end device or a receive end device may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software function module. It should be noted that in embodiments of this application, module division is an example, and is merely a logical function division. In actual implementation, another division manner may be used. An example in which each functional module is obtained through division based on each corresponding function is used below for description.

FIG. 8 is a block diagram of an example of a communication apparatus 800 according to this application. Any device involved in any method in FIG. 3 to FIG. 7, for example, the first network element, the second network element, and the third network element, may be implemented by the communication apparatus shown in FIG. 8.

It should be understood that the communication apparatus 800 may be a physical device, a component (for example, an integrated circuit or a chip) of a physical device, or may be a function module in a physical device.

As shown in FIG. 8, the communication apparatus 800 includes one or more processors 810. Optionally, the processor 810 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented by a transceiver. Optionally, the communication apparatus 800 may further include a transceiver 830. The transceiver 830 may also be referred to as a transceiver unit, a transceiver, a transceiver circuit, or the like, and is configured to implement a transceiver function.

Optionally, the communication apparatus 800 may further include a memory 820. A specific deployment location of the memory 820 is not specifically limited in this embodiment of this application. The memory may be integrated into the processor, or may be independent of the processor. When the communication apparatus 800 does not include a memory, the communication apparatus 800 needs to have only a processing function, and the memory may be deployed at another location (for example, a cloud system).

The processor 810, the memory 820, and the transceiver 830 communicate with each other through an internal connection path, to transfer a control signal and/or a data signal.

It may be understood that, although not shown, the communication apparatus 800 may further include another apparatus, for example, an input apparatus, an output apparatus, or a battery.

Optionally, in some embodiments, the memory 820 may store execution instructions used to perform the method in embodiments of this application. The processor 810 may execute the instructions stored in the memory 820 and complete, in combination with other hardware (for example, the transceiver 830), the steps performed in the following method. For a specific working process and beneficial effect, refer to the descriptions in the foregoing method embodiments.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

FIG. 9 is a block diagram of a communication apparatus 900 according to this application.

Optionally, a specific form of the communication apparatus 900 may be a general-purpose computer device or a chip in a general-purpose computer device. This is not limited in this embodiment of this application. As shown in FIG. 9, the communication apparatus includes a processing unit 910 and a transceiver unit 920.

Specifically, the communication apparatus 900 may be any device in this application, and may implement a function that can be implemented by the device. It should be understood that the communication apparatus 900 may be a physical device, a component (for example, an integrated circuit or a chip) of a physical device, or may be a function module in a physical device.

In a possible design, the communication apparatus 900 may be the first network element or the like in the foregoing method embodiments, or may be a chip configured to implement the function of the first network element or the like in the foregoing method embodiments.

It should be further understood that, when the communication apparatus 900 is the first network element, the transceiver unit 920 in the communication apparatus 900 may be implemented through a communication interface (for example, a transceiver or an input/output interface), and the processing unit 910 in the communication apparatus 900 may be implemented by using at least one processor, for example, may correspond to the processor 810 shown in FIG. 8.

Optionally, the communication apparatus 900 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein.

In addition, in this application, the channel state feedback apparatus 900 is presented in a form of a functional module. The "module" herein may be an application-specific integrated circuit ASIC, a circuit, a processor that executes one or more software or firmware programs and a memory, an integrated logic circuit, and/or another component capable of providing the foregoing functions. In a simple embodiment, a person skilled in the art may figure out that the apparatus 900 may be in a form shown in FIG. 9. The processing unit 910 may be implemented by using the processor 810 shown in FIG. 8. Optionally, if the computer device shown in FIG. 8 includes the memory 800, the processing unit 910 may be implemented by using the processor 810 and the memory 800. The transceiver unit 920 may be implemented by using a transceiver 830 shown in FIG. 8. The transceiver 830 includes a receiving function and a sending function. Specifically, the processor executes a computer program stored in a memory to implement a function of the processing module. Optionally, when the apparatus 900 is a chip, a function and/or an implementation process of the transceiver unit 920 may be alternatively implemented by using a pin, a circuit, or the like. Optionally, the memory may be a storage unit in the chip, for example, a register or a cache. Alternatively, the storage unit may be a storage unit that is in the channel state feedback apparatus and that is located outside the chip, for example, the memory 820 shown in FIG. 8, or may be a storage unit that is deployed in another system or device and is not in the computer device.

Various aspects or features of this application may be implemented as methods, apparatuses, or products using standard programming and/or engineering techniques. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

According to the method provided in embodiments of this application, this application further provides a computer program product. The computer program product includes a computer program or a group of instructions. When the computer program or the group of instructions is/are run on a computer, the computer is enabled to perform the method in any one of the embodiments shown in FIG. 3 and FIG. 7.

According to the method provided in embodiments of this application, this application further provides a computer-readable storage medium. The computer-readable storage medium stores a program or a group of instructions. When the program or the group of instructions is/are run on a computer, the computer is enabled to perform the method in any one of the embodiments shown in FIG. 3 and FIG. 7.

Based on the methods provided in embodiments of this application, this application further provides a communication system. The communication system includes the foregoing apparatus or device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, a terminal device, or another programmable apparatus. The computer programs or the instructions may be stored in a computer-readable storage medium, or may be transmitted by using a computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", and the like are merely used to distinguish between different objects, for example, to distinguish between different network devices, and constitute no limitation on the scope of embodiments of this application. Embodiments of this application are not limited thereto.

It should be further understood that in this application, "when" and "if" both refer to corresponding processing performed by the network element in an objective case, are not intended to limit time, do not require a determining action to be performed during implementation of the network element, and do not imply that there is any other limitation.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression in this application similar to an expression that "an item includes one or more of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that numerical symbols involved in embodiments of this application are differentiated merely for ease of description, but are not used to limit the scope of embodiments of this application. The sequence numbers of the foregoing processes do not mean execution sequences, and the execution sequences of the processes should be determined based on functions and internal logic of the processes.

## Claims

1. A communication method, wherein the method is applied to a communication system comprising a first network element and a second network element, the first network element belongs to a first network of a first operator, the second network element belongs to a second network of a second operator, and the method comprises:
sending, by the first network element, check content to the second network element, wherein the check content indicates an abnormal event that causes a fault of the second network; and
receiving, by the first network element, a check result from the second network element, wherein the check result indicates whether the abnormal event occurs in the second network.

2. The method according to claim 1, wherein the method further comprises:
determining, by the first network element, a fault root cause based on the check result, wherein the fault root cause indicates a cause of the abnormal event.

3. The method according to claim 1 or 2, wherein the method further comprises:
sending, by the first network element, a first request to the second network element, wherein the first request indicates to perform fault rectification based on the fault root cause.

4. The method according to any one of claims 1 to 3, wherein the method further comprises:
sending, by the first network element, a data type to the second network element, wherein the data type indicates a type of data information corresponding to the check content.

5. The method according to any one of claims 1 to 3, wherein the method further comprises:
sending, by the first network element, a data type and fault information to the second network element, wherein the data type indicates a type of data information corresponding to the check content, and the fault information indicates a severity of the fault of the second network.

6. The method according to claim 4 or 5, wherein the method further comprises:
receiving, by the first network element, first indication information from the second network element, wherein the first indication information indicates that the second network element does not allow disclosure of the data information, or the first indication information indicates that the second network element supports confirmation of the check result.

7. The method according to any one of claims 1 to 6, wherein the method further comprises:
sending, by the first network element, the data type to a third network element, wherein the data type indicates the type of the data information corresponding to the check content, and the third network element belongs to the first network.

8. The method according to any one of claims 1 to 7, wherein the method further comprises:
receiving, by the first network element, third indication information from the third network element, wherein the third indication information indicates that data information of the first network is allowed to be disclosed, and the data information of the first network corresponds to the check content.

9. A communication method, wherein the method is applied to a communication system comprising a first network element and a second network element, the first network element belongs to a first network of a first operator, the second network element belongs to a second network of a second operator, and the method comprises:
receiving, by the second network element, check content from the first network element, wherein the check content indicates an abnormal event that causes a fault of the second network; and
sending, by the second network element, a check result to the first network element, wherein the check result indicates whether the abnormal event occurs in the second network.

10. The method according to claim 9, wherein the method further comprises:
determining, by the second network element, the check result based on the check content.

11. The method according to claim 9 or 10, wherein the method further comprises:
receiving, by the second network element, a first request from the first network element, wherein the first request indicates to perform fault rectification based on a fault root cause.

12. The method according to any one of claims 9 to 11, wherein the method further comprises:
receiving, by the second network element, a data type from the first network element, wherein the data type indicates a type of data information corresponding to the check content; and
determining, by the second network element based on the data type, that the data information is not allowed to be disclosed.

13. The method according to any one of claims 9 to 11, wherein the method further comprises:
receiving, by the second network element, a data type and fault information from the first network element, wherein the data type indicates a type of data information corresponding to the check content, and the fault information indicates a severity of the fault of the second network; and
determining, by the second network element based on the data type and the fault information, that the data information is not allowed to be disclosed.

14. The method according to claim 12 or 13, wherein the method further comprises:
sending, by the second network element, first indication information to the first network element, wherein the first indication information indicates that the second network element does not allow disclosure of the data information, or the first indication information indicates that the second network element supports confirmation of the check result.

15. The method according to any one of claims 12 to 14, wherein the method further comprises:
sending, by the second network element, the first indication information to a third network element, wherein the third network element belongs to the first network.

16. A communication method, wherein the method is applied to a communication system comprising a first network element and a second network element, the first network element belongs to a first network of a first operator, the second network element belongs to a second network of a second operator, and the method comprises:
sending, by the first network element, first information to the second network element, wherein the first information is used to request data information corresponding to check content, and the check content indicates an abnormal event that causes a fault of the second network;
receiving, by the first network element, data information from the second network element; and
determining, by the first network element, a check result based on the data information, wherein the check result indicates whether the abnormal event occurs in the second network.

17. The method according to claim 16, wherein the method further comprises:
determining, by the first network element, a fault root cause based on the check result, wherein the fault root cause indicates a cause of the abnormal event.

18. The method according to claim 16 or 17, wherein the method further comprises:
sending, by the first network element, a first request to the second network element, wherein the first request indicates to perform fault rectification based on the fault root cause.

19. The method according to any one of claims 16 to 18, wherein the method further comprises:
sending, by the first network element, a data type to the second network element, wherein the data type indicates a type of the data information corresponding to the check content.

20. The method according to any one of claims 16 to 18, wherein the method further comprises:
sending, by the first network element, a data type and fault information to the second network element, wherein the data type indicates a type of the data information corresponding to the check content, and the fault information indicates a severity of the fault of the second network.

21. The method according to claim 18 or 19, wherein the method further comprises:
receiving, by the first network element, second indication information from the second network element, wherein the second indication information indicates that the second network element allows disclosure of the data information.

22. A communication method, wherein the method is applied to a communication system comprising a first network element and a second network element, the first network element belongs to a first network of a first operator, the second network element belongs to a second network of a second operator, and the method comprises:
receiving, by the second network element, first information from the first network element, wherein the first information is used to request data information corresponding to check content, and the check content indicates an abnormal event that causes a fault of the second network; and
sending, by the second network element, data information to the first network element, wherein the data information is used to determine a check result, and the check result indicates whether the abnormal event occurs in the second network.

23. The method according to claim 22, wherein the method further comprises:
receiving, by the second network element, a first request from the first network element, wherein the first request indicates to perform fault rectification based on a fault root cause.

24. The method according to claim 22 or 23, wherein the method further comprises:
receiving, by the second network element, a data type from the first network element, wherein the data type indicates a type of the data information corresponding to the check content; and
determining, by the second network element based on the data type, that the data information is allowed to be disclosed.

25. The method according to claim 22 or 23, wherein the method further comprises:
receiving, by the second network element, a data type and fault information from the first network element, wherein the data type indicates a type of the data information corresponding to the check content, and the fault information indicates a severity of the fault of the second network; and
determining, by the second network element based on the data type and the fault information, that the data information is allowed to be disclosed.

26. The method according to claim 24 or 25, wherein the method further comprises:
sending, by the second network element, second indication information to the first network element, wherein the second indication information indicates that the second network element allows disclosure of the data information.

27. A communication apparatus, comprising:
a processor, configured to execute a computer program stored in a memory, to enable the communication apparatus to perform the method according to any one of claims 1 to 26.

28. A computer-readable storage medium, wherein the computer-readable storage medium stores a computer program or instructions, and when the computer program or the instructions is/are executed by a processor, the method according to any one of claims 1 to 26 is performed.

29. A computer program product comprising instructions, wherein when the computer program product runs on a computer, the method according to any one of claims 1 to 26 is performed.

30. A chip system, comprising a processor, configured to invoke a computer program or instructions from a memory and run the computer program or the instructions, so that a communication apparatus on which the chip system is installed is enabled to implement the method according to any one of claims 1 to 26.
